# EUROPÄISCHE PATENTSCHRIFT

(11) **EP 3 924 275 B1**
(45) Veröffentlichungstag und Bekanntmachung des Hinweises auf die Patenterteilung: **28.05.2025**
(21) Anmeldenummer: 20705666.4
(22) Anmeldetag: 13.02.2020
(51) Int. Cl.: B65G 1/137

(54) **LAGERVERWALTUNGSSYSTEM, KOMMISSIONIER- UND LAGERSYSTEM UND KOMMISSIONIERVERFAHREN MIT BLICKFANGGEBERN, DEREN FARBEN AUTOMATISCH UMSCHALTBAR SIND**
WAREHOUSE MANAGEMENT SYSTEM, PICKING AND STORAGE SYSTEM, AND PICKING METHOD WITH EYE-CATCHING DEVICES WHOSE COLORS ARE AUTOMATICALLY SWITCHABLE
SYSTÈME DE GESTION D'ENTREPÔT, SYSTÈME DE PRÉLÈVEMENT ET DE STOCKAGE ET MÉTHODE DE PRÉLÈVEMENT AVEC DES CAPTEURS ATTIRANT L'ATTENTION DONT LES COULEURS SONT AUTOMATIQUEMENT COMMUTABLES

(30) Priorität: 15.02.2019 DE 102019202096
(43) Veröffentlichungstag der Anmeldung: 22.12.2021
(73) Patentinhaber: Kardex Produktion Deutschland GmbH, 86476 Neuburg/Kammel (DE)
(72) Erfinder: HARDER, Emmanuel, 68789 St. Leon-Rot (DE)
(86) Internationale Anmeldenummer: PCT/EP2020/053784
(87) Internationale Veröffentlichungsnummer: WO 2020/165358

(56) Entgegenhaltungen:
- EP-A1- 2 876 059
- JP-A- 2003 321 111
- JP-A- 2009 263 018
- JP-A- H0 455 201
- US-A1- 2004 083 144
- US-A1- 2006 206 235
- US-A1- 2016 229 631

## Beschreibung

Die Erfindung betrifft ein Lagerverwaltungssystem zur Steuerung einer Kommissionierung, insbesondere beleglosen Kommissionierung, mittels wenigstens eines Kommissionierwagens zur Ablage von Artikeln einer Zusammenstellung von Kommissionieraufträgen und mittels wenigstens einer Lagereinheit mit Lagerplätzen zur Lagerung der Artikel und wenigstens einer Zugriffsstation zum Zugriff auf die Artikel durch einen Kommissionierer. Die Erfindung betrifft auch ein Kommissionier- und Lagersystem, welches mit wenigstens einem Lagerverwaltungssystem der vorgenannten Art ausgestaltet ist. Darüber hinaus betrifft die Erfindung ein Kommissionierverfahren, bei dem einem Kommissionierwagen eine Zusammenstellung von Kommissionieraufträgen mit einer Mehrzahl von Artikeln zugeordnet wird. Letztendlich betrifft die Erfindung auch ein Computerprogrammprodukt oder ein computerlesbares Speichermedium.

Unter Kommissionieren wird im Folgenden die Einlagerung von Artikeln aus einem Kommissionierwagen in eine Lagereinheit und/oder die Auslagerung von Artikeln aus einer Lagereinheit in einen Kommissionierwagen verstanden, insbesondere durch einen Kommissionierer. Um das Kommissionieren effizient zu gestalten, kann es hilfreich sein, den Kommissionierer bei seiner Tätigkeit zumindest teilweise zu führen, so dass dieser schnell und einfach eine für den Zugriff bestimmte Lagereinheit und/oder einen für den Zugriff bestimmten Kommissionierwagen auffinden kann. Die Führung durch das Lagerverwaltungssystem soll dabei intuitiv verständlich und für den Kommissionierer so ermüdungsfrei wie möglich sein.

Aus der US 2016/229631 A1 ist ein Kommissioniersystem für ein Lager bekannt. In dem Lager gibt es einen Pickbereich und einen Bereich, in dem Roboter einzelne Regale anheben und verfahren können. Zum Kommissionieren können die Roboter Regale an eine Grenze zwischen beiden Bereichen heranfahren, sodass eine Bedienperson im Pickbereich Artikel aus den Regalen entnehmen kann. Ein Steuersystem des Lagers kann Bildschirme an Kommissionierwagen dazu veranlassen, anzuzeigen, dass ein Artikel abholbereit in einem Regal an der Bereichsgrenze liegt. Die US 2016/229631 offenbart insbesondere ein Lagerverwaltungssystem gemäß dem Oberbegriff des Anspruchs 1.

Die JP H0455201A befasst sich mit der Sortierung von Lagerartikeln. Ein Steuergerät erkennt den Bestimmungsort eines eingegangenen Lagerartikels automatisch. Das Steuergerät lässt eine Sortierlampe an einem temporären Lagerplatz des Lagerartikels einschalten. Am Bestimmungsort des Lagerartikels leuchtet ein Sortierabschlussschalter mit der gleichen Farbe wie die leuchtende Sortierlampe auf, um anzuzeigen, in welchen Lagerbereich der Lagerartikel abgelegt werden soll. Nach Abschluss des Ablegens wird der leuchtende Sortierabschlussschalter gedrückt, um diese Informationen in das Steuergerät einzugeben.

Die US 20040083144 A1 betrifft ein Bestandsverwaltungssystem und ein Verfahren zum Auffüllen von Fertigungskits. Eine wagenartige, mobile Kommissionierstation kommuniziert sowohl mit einem Lagerregalsystem als auch mit einem Datenserver über eine Kommunikationsschnittstelle. Spezifikationsdaten des Fertigungskits werden über den Datenserver bereitgestellt und dienen dazu, eine Karte des Fertigungskits auf einem Touchscreen-Display der mobilen Kommissionierstation darzustellen. Die Karte zeigt Typ, Menge und Platzierung der Teile im Fertigungskit. Die Verfolgung der Systemkomponenten erfolgt über ein Barcodesystem.

Es ist daher die Aufgabe der Erfindung, ein Lagerverwaltungssystem, ein Kommissionier- und Lagersystem, ein Kommissionierverfahren und ein Computerprogrammprodukt jeweils der oben genannten Art bereitzustellen, mit denen eine solche Führung möglich ist.

Für das oben genannte Lagerverwaltungssystem ist die erfindungsgemäße Aufgabe dadurch gelöst, dass der Kommissionierwagen und die Zugriffsstation jeweils mit einem Blickfanggeber versehen sind und wenigstens einer der Blickfanggeber einen Anzeigebereich mit ferngesteuert umschaltbarer Farbe aufweist, wobei das Lagerverwaltungssystem ausgestaltet ist, automatisch zu erkennen, ob wenigstens ein Artikel der Zusammenstellung in der Zugriffsstation für den Kommissionierer zugriffsbereit positioniert ist und die Farbe des wenigstens einen ferngesteuert umschaltbaren Blickfanggebers automatisch auf die Farbe des anderen Blickfanggebers umzuschalten, wenn erkannt worden ist, dass der Artikel innerhalb einer vorbestimmten Zeit zugriffsbereit positioniert ist, wobei das Lagerverwaltungssystem ferner dazu ausgestaltet ist, in Abhängigkeit von einer Zuordnung des Kommissionierers zu einem Kommissionierwagen an einem Anzeigebereich mit ferngesteuert umschaltbarer Farbe eines am Körper des Kommissionierers tragbaren Informationsgebers und an einem Anzeigebereich eines Blickfanggebers eines Kommissionierwagens automatisch die gleiche Farbe einzustellen.

Für das eingangs genannte Kommissionier- und Lagersystem ist die erfindungsgemäße Aufgabe dadurch gelöst, dass das Kommissionier- und Lagersystem das oben genannte erfindungsgemäße Lagerverwaltungssystem umfasst, und wobei das Kommissionier- und Lagersystem wenigstens einen Kommissionierwagen umfasst, der mit einem Blickfanggeber mit einem farbigen Anzeigebereich versehen ist, und wobei das Kommissionier- und Lagersystem wenigstens eine Lagereinheit umfasst, die mit einem weiteren Blickfanggeber mit einem farbigen Anzeigebereich versehen ist. Wenigstens einer der Anzeigebereiche weist dabei eine vom Lagerverwaltungssystem ferngesteuert umschaltbare Farbe auf.

Für das eingangs genannte Kommissionierverfahren ist die erfindungsgemäße Aufgabe dadurch gelöst, dass bei dem Verfahren einem Kommissionierwagen eine Zusammenstellung von Kommissionieraufträgen mit einer Mehrzahl von Artikeln zugeordnet wird, und auch dass bei dem Verfahren automatisch festgestellt wird, dass wenigstens ein Artikel der Zusammenstellung an wenigstens einer Zugriffsstation wenigstens einer Lagereinheit für einen Kommissionierer zugriffsbereit ist, wobei der Kommissionierwagen und die Zugriffsstation jeweils einen Blickfanggeber mit einem farbigen Anzeigebereich aufweisen und die Farbe wenigstens eines Anzeigebereichs ferngesteuert umschaltbar ist, wobei die Farbe des wenigstens einen ferngesteuert umschaltbaren Anzeigebereichs nach der Feststellung der Zugriffsbereitschaft automatisch auf die Farbe des anderen Anzeigebereichs umgeschaltet wird, und wobei in Abhängigkeit von einer Zuordnung des Kommissionierers zu einem Kommissionierwagen an einem Anzeigebereich mit ferngesteuert umschaltbarer Farbe eines am Körper des Kommissionierers tragbaren Informationsgebers und an einem Anzeigebereich eines Blickfanggebers eines Kommissionierwagens automatisch die gleiche Farbe eingestellt wird.

Für das eingangs genannte Computerprogrammprodukt oder das computerlesbare Speichermedium ist die erfindungsgemäße Aufgabe dadurch gelöst, dass das Computerprogrammprodukt oder das computerlesbare Speichermedium Befehle umfasst, insbesondere ein Computerprogramm mit Befehlen, die bei der Ausführung des Programms bzw. der Befehle durch einen Computer diesen verlassen, das erfindungsgemäße Verfahren bzw. die Schritte dieses Verfahrens auszuführen.

Durch die erfindungsgemäße Lösung ist es möglich, die Farben der beiden Blickfanggeber aneinander anzugleichen. Mit anderen Worten zeigt der Blickfanggeber des Kommissionierwagens die gleiche Farbe wie der Blickfanggeber der Zugriffsstation an. Hierdurch ist es für einen Kommissionierer ein Leichtes, eine Zugriffsstation, an der ein Artikel einer Zusammenstellung abzuholen oder einzulagern ist, mit dem für diese Zusammenstellung oder einen Kommissionierauftrag der Zusammenstellung vorgesehenen Kommissionierwagen in Beziehung zu setzen und einen Zugriff entsprechend auszuführen.

Unter dem Zugriff ist dabei zu verstehen, einen Artikel aus dem Kommissionierwagen an der Zugriffsstation der Lagereinheit zuzuführen oder an der Zugriffsstation aus der Lagereinheit zu entnehmen und dem Kommissionierwagen zuzuführen. Dadurch, dass das Lagerverwaltungssystem dazu ausgestaltet ist, eine Farbe wenigstens eines der beiden Blickfanggeber ferngesteuert umzuschalten, kann flexibel auf eine jeweilige Situation, insbesondere auf Änderungen reagiert werden. Unter der vorbestimmten Zeit innerhalb der ein Artikel zugriffsbereit positioniert ist, ist eine maximale Zeit zu verstehen, innerhalb der ein Artikel zum Zugriff bereit ist. Befindet sich ein Artikel auf dem Weg in eine Zugriffsstation, so kann die baldige Ankunft des Artikels in der Zugriffsstation bereits durch umschalten der Farbe eines Blickfanggebers signalisiert werden. Wird als vorbestimmte Zeit dagegen eine Zeitdauer von 0 Sekunden gewählt, kann das umschalten der Farbe erst in dem Augenblick geschehen, indem der Artikel tatsächlich zugriffsbereit positioniert ist. Es bietet sich an, als vorbestimmte Zeit eine Zeit zu wählen, die etwa zwischen 5 und 10 Sekunden liegt.

Die erfindungsgemäße Lösung kann durch verschiedene, jeweils für sich vorteilhafte und beliebig miteinander kombinierbare Ausgestaltungen weiter verbessert werden. Auf diese Ausgestaltungsformen und die mit ihnen verbundenen Vorteile ist im Folgenden eingegangen.

Das umschalten der Farbe kann beispielsweise auch schon zu einem Zeitpunkt erfolgen, an dem ein vorheriger Artikel, der für einen Zugriff bereit lag, bereits ein- oder ausgelagert wurde. Alternativ dazu kann die Farbe auch umgeschaltet werden, sobald ein für den Zugriff bestimmte Artikel so Zugriffsstation hin bewegt wird. Das Lagerverwaltungssystem kann beispielsweise anhand der bekannten Artikelposition, anhand bekannter Geschwindigkeiten und/oder bekannter Wegstrecken innerhalb einer Lagereinheit eine Restzeit berechnen, die es noch zum Eintreffen eines Artikels in der Zugriffsstation braucht. Das unterschreiten einer vorbestimmten Schwelle der Restzeit kann als Auslöser zum umschalten der Farbe genutzt werden.

Die Zusammenstellung bzw. deren Kommissionieraufträge können vorbestimmt sein. Mit anderen Worten kann, beispielsweise anhand einer Artikelbestellung eines Kunden, eine feststehende Liste von zu kommissionierenden Artikeln vorhanden sein. Alternativ dazu kann das Lagerverwaltungssystem einen Kommissionierauftrag auch dynamisch verändern. Auch die Zusammenstellung von Kommissionieraufträgen kann, insbesondere durch das Lagerverwaltungssystem, vorbestimmt sein. Bevorzugt ist eine Zusammenstellung genau einem Kommissionierwagen zugeordnet.

Der Kommissionierwagen stellt einen Artikelsammelbereich für Artikel dar. Ein solcher Kommissionierwagen wird häufig auch als "Pick-Cart" bezeichnet.

Die Lagereinheit kann ein statisches Regal, ein automatisches Lagersystem mit Fördereinrichtung, beispielsweise ein Lagerlift, ein Lagerregal mit Gassenförderer oder ein Paternoster sein.

Auch andere Mittel zum Lagern und/oder zum Bereitstellen von Artikeln können eine Lagereinheit bilden.

Der wenigstens eine Blickfanggeber der Zugriffsstation ist bevorzugt an der Lagereinheit angebracht und von außerhalb der Lagereinheit sichtbar angeordnet. Bevorzugt ist die wenigstens eine Zugriffsstation mit einem femgesteuert umschaltbaren Blickfanggeber versehen. Eine Lagereinheit kann mehrfache räumlich voneinander getrennte Zugriffsstationen aufweisen. Bevorzugt ist jeder Zugriffsstation dabei ein ferngesteuert umschaltbarer Blickfanggeber zugeordnet. Beispielsweise kann an jeder Zugriffsstation ein ferngesteuert umschaltbarer Blickfanggeber angeordnet sein. Eine Zugriffsstation kann beispielsweise eine Ein- und/oder Auslagerungsstation sein.

Alternativ zu einer Lagereinheit mit einer oder mehreren Zugriffsstationen kann auch die gesamte Lagereinheit eine Zugriffsstation sein, beispielsweise bei einem Regal.

Eine Lagereinheit kann dann für den Zugriff bereit sein, wenn der wenigstens eine Artikel in einer Zugriffsstation der Lagereinheit bereitliegt. Alternativ oder zusätzlich dazu kann die Lagereinheit für einen Zugriff bereit sein, wenn der wenigstens eine Artikel innerhalb einer vorbestimmten Transportzeit in der Zugriffsstation ankommt und/oder eine vorbestimmte Transportstrecke von der Zugriffsstation entfernt ist. Dies kann insbesondere bei einer Lagereinheit mit einer Fördereinrichtung der Fall sein, die dazu ausgestaltet ist, Artikel zwischen den Lagerplätzen und wenigstens einer Zugriffsstation zu transportieren.

Das Lagerverwaltungssystem kann eine Repräsentation, insbesondere eine virtuelle bzw. digitale Repräsentation der Artikel und ihrer Position innerhalb des in einer Lagereinheit gelagerten oder einzulagernden Sortiments umfassen. Das Lagerverwaltungssystem kann dazu ausgestaltet sein, anhand einer solchen Repräsentation der Position der Artikel die Bereitschaft zum Zugriff zu erfassen. Mit anderen Worten kann das Lagerverwaltungssystem zum Verfolgen der Artikel, also zum "Tracken" der Artikel ausgestaltet sein.

Das Lagerverwaltungssystem kann Hardware, beispielsweise einen Computer mit wenigstens einer CPU (Central Processing Unit) oder mehrere miteinander vernetzte Computer, umfassen. Alternativ dazu kann das Lagerverwaltungssystem auch Software, insbesondere ein Computerprogrammprodukt umfassen. Ebenso kann das Lagerverwaltungssystem eine Kombination von Hardware und Software umfassen.

Der Anzeigebereich eines Blickfanggebers kann beispielsweise wenigstens ein farbveränderliches Leuchtmittel aufweisen. Alternativ oder zusätzlich dazu kann der Anzeigebereich auch durch eine geeignete Anzeigevorrichtung, beispielsweise ein Display, gebildet sein, welches verschiedene Farben darstellen kann. Hierzu seien lediglich beispielhaft LCD, TFT und OLED-Displays genannt. Ebenso können verschiedenfarbige Leuchtdioden (LED) oder RGB-LEDs verwendet werden, die zum Leuchten in verschiedenen Farben ansteuerbar sind.

Der Anzeigebereich kann dazu ausgestaltet sein, zusätzliche Informationen anzuzeigen. Beispielsweise kann der Anzeigebereich eines Blickfanggebers am Kommissionierwagen eine den Kommissionierwagen repräsentierende Identifikation, beispielsweise eine Zahl, anzeigen. Bevorzugt ist der Blickfanggeber, zumindest der am Kommissionierwagen durch eine Blickfangleuchte gebildet, die möglichst von weither sichtbar am Kommissionierwagen angebracht ist. Wenn im folgenden Text von der Farbe des Blickfanggebers die Rede ist, ist damit die Farbe des Anzeigebereichs des jeweiligen Blickfanggebers, bzw. die vom Anzeigebereich dargestellte Farbe, gemeint.

Die Zusammenstellung von Kommissionieraufträgen umfasst wenigstens einen Kommissionierauftrag. Insbesondere für den Fall, dass einzelne Kommissionieraufträge nur eine geringe Menge von Artikeln oder nur kleine Artikel betreffen, enthält eine Zusammenstellung bevorzugt mehrere Kommissionieraufträge. Dabei enthält eine Zusammenstellung bevorzugt so viele Kommissionieraufträge, dass die zu den Kommissionieraufträgen gehörenden Artikel in einem Kommissionierwagen untergebracht werden können.

Zur Unterbringung von Artikeln weist ein Kommissionierwagen, bevorzugt eine Mehrzahl von Lagergutbehältern, sogenannte "Handling Units", auf. Eine solche Handling Unit kann beispielsweise durch ein Fach in einem Kommissionierwagen gebildet sein. Während des Kommissionierens ist eine Handling Unit jeweils einem Kommissionierauftrag, bevorzugt genau einem Kommissionierauftrag, zugeordnet. Wenn die Anzahl der Artikel eines Kommissionierauftrags das Fassungsvermögen einer Handling Unit übersteigt, kann ein Kommissionierauftrag auch mehre Handling Units umfassen.

Die Zugriffsstation ist mit einem Blickfanggeber versehen. Darunter ist zu verstehen, dass der Blickfanggeber visuell der Zugriffsstation zugeordnet ist, sich also beispielsweise näher an dieser Zugriffsstation befindet, als an einer anderen Zugriffsstation. Der Blickfanggeber muss also nicht zwingend an oder in der Zugriffsstation angebracht sein. Bevorzugt ist er an der Lagereinheit, beispielsweise an einem Gehäuse der Lagereinheit, in der Nähe der Zugriffstation angebracht. Der Blickfanggeber ist bevorzugt von weither sichtbar an einer Lagereinheit angebracht.

Wie schon oben beschrieben, kann das erfindungsgemäße Lagerverwaltungssystem dazu verwendet werden, einen Kommissionierwagen und eine für den Zugriff bereitstehende Zugriffsstation für den Kommissionierer sofort erkennbar farblich miteinander zu verknüpfen. Darüber hinaus kann das Lagerverwaltungssystem dazu ausgestaltet sein, auch eine farbliche Verknüpfung zwischen einer Handling Unit des Kommissionierwagens mit dem Kommissionierwagen und/oder mit der Zugriffsstation zu erzeugen. Beispielsweise kann wenigstens eine Handling Unit eines Kommissionierwagens ebenfalls mit einer Anzeigevorrichtung mit ferngesteuert umschaltbarer Farbe versehen sein.

Anhand einer gleichen Farbe an den Blickfanggebern der Zugriffsstation und des Kommissionierwagens kann ein Kommissionierer zunächst einen Kommissionierwagen einer Zugriffsstation zuordnen. Durch eine entsprechende Anzeigevorrichtung an einer Handling Unit kann dann darüber hinaus die Handling Unit der Zugriffsstation zugeordnet werden. Das Zuordnen eines Artikels zu einer farblich markierten Handling Unit ist bei der Entnahme von Artikeln aus einer Lagereinheit als Pick-by-Color und beim Einlagern von Artikeln in eine Lagereinheit als Put-by-Color bezeichnet.

Der Begriff "Farbe" im Sinne der Lehre dieser Erfindung kann auch einen weißen, schwarzen, farblosen oder ausgeschalteten, also einen nicht leuchtenden, Anzeigebereich umfassen. Unter Farben können zudem auch verschiedene zeitlich und/oder räumlich sich ändernde Farbmuster zu verstehen sein.

Das Lagerverwaltungssystem kann dadurch weiter verbessert werden, dass es dazu ausgestaltet ist, bei einer Vielzahl von Zugriffsstationen, die jeweils mit einem ferngesteuert umschaltbaren Blickfanggeber versehen sind, automatisch die Anzeigebereiche der Blickfanggeber derjenigen Zugriffsstationen, die als bereit für den Zugriff auf Artikel der Zusammenstellung eines Kommissionierwagens ermittelt sind, auf die Farbe des Anzeigebereichs des Blickfanggebers dieses Kommissionierwagens umzuschalten. Auf diese Weise können alle für den Zugriff bereitstehenden Zugriffsstationen farblich markiert werden, so dass der Kommissionierer diese mit seinem Kommissionierwagen anfahren und auf diese zugreifen kann.

Zeigen die Blickfanggeber mehrerer Zugriffsstationen die gleiche Farbe an, kann der Kommissionierer selbst entscheiden, welche dieser Zugriffsstationen er beim Abarbeiten seiner Zusammenstellung bzw. seines Kommissionierauftrags zuerst ansteuert. Durch diese Wahlmöglichkeit ist die Eigenverantwortung für den Kommissionierer erhöht. Dadurch kann das Kommissionieren für den Kommissionierer weniger ermüdend sein. Mit anderen Worten kann die Ermüdungsfreiheit verbessert sein. Langfristig gesehen kann dadurch die Effizienz beim Kommissionieren erhöht sein, auch wenn ein Kommissionierer nicht immer den kürzesten Weg zum Abarbeiten seiner Zusammenstellung bzw. seines Kommissionierauftrags wählen wird. Um dem Kommissionierer bei seiner Wahl zu unterstützen, kann wenigstens eine Zugriffstation mit einer Restzeitanzeige versehen sein, die die Dauer angibt, wie lange es bis zur Zugriffsbereitschaft dauert, also beispielsweise wie lange es bis zum Eintreffen von Artikeln in der Zugriffstation dauert.

Das Lagerverwaltungssystem kann dazu ausgestaltet sein, bei einer Mehrzahl von Kommissionierwagen, die jeweils einen Blickfanggeber mit einem Anzeigebereich unterschiedlicher Farbe aufweisen und bei einer Vielzahl von Zugriffsstationen, die jeweils mit einem ferngesteuert umschaltbaren Blickfanggeber versehen sind, automatisch die Anzeigebereiche der Blickfanggeber derjenigen Zugriffsstationen, die als bereit für den Zugriff der Zusammenstellung eines Kommissionierwagens ermittelt sind, auf die Farbe des Anzeigebereichs dieses Kommissionierwagens umzuschalten. Hierdurch ist es möglich, mehrere Kommissionierwagen zusammen mit mehreren Zugriffsstationen zu nutzen. Dabei können die für einen Kommissionierwagen für den Zugriff bereitstehenden Zugriffsstationen und der Kommissionierwagen durch eine Farbe gekennzeichnet werden und die für den wenigstens einen weiteren Kommissionierwagen bereitstehenden Zugriffsstationen und der wenigstens eine weitere Kommissionierwagen durch eine andere Farbe markiert werden. Da durch die intuitiv anhand der unterschiedlichen Farben leicht zu unterscheidenden Zugriffsstationen und Kommissionierwagen das Risiko von Verwechslungen niedrig ist, können eine Vielzahl von Kommissionierwagen und/oder Zugriffsstationen gleichzeitig zum Abarbeiten einer Vielzahl von Zusammenstellungen bzw. von Kommissionieraufträgen verwendet werden.

Um auf einfach erkennbare Weise anzuzeigen, dass sämtliche für den Zugriff bestimmten Artikel einer Zugriffsstation entnommen worden sind, kann das Lagerverwaltungssystem dazu ausgestaltet sein, nach Zugriff auf sämtliche für den Zugriff bereitgestellten Artikel einer Zusammenstellung aus einer Zugriffsstation die Farbe des Blickfanggebers dieser Zugriffsstation automatisch umzuschalten. Hierzu ist es von Vorteil, wenn das Lagerverwaltungssystem dazu ausgestaltet ist, den Zugriff, also die Entnahme oder Ablage von Lagergut, auf sämtliche bereitgestellten Artikel der Zusammenstellung automatisch zu erfassen. Die Entnahme sämtlicher Artikel kann beispielsweise durch Quittierung eines Kommissionierers oder automatisch durch Überwachung der Zugriffsstation, beispielsweise mittels einer Kamera, erkannt werden. Die Farbe des Blickfanggebers der Zugriffsstation kann dann beispielsweise auf einen neutralen Wert gestellt oder auf eine Farbe des Anzeigebereichs eines Blickfanggebers eines weiteren Kommissionierwagens, dessen Artikel als nächstes in der Zugriffsstation bereitgestellt werden.

Das Kommissionieren von Artikeln kann dadurch effizienter gestaltet werden, dass das Lagersystem dazu ausgestaltet ist, eine oder mehrere Lagereinheiten automatisch so zu steuern, dass einzelne Artikel einer Zusammenstellung in mehr als einer Zugriffsstation gleichzeitig bereitgestellt werden. Ein Kommissionierer kann dann gleichzeitig oder nacheinander die mehreren Zugriffsstationen anfahren und auf diese zugreifen.

Das Umschalten einer Farbe des Blickfanggebers eines Kommissionierwagens auf eine Farbe einer für den Zugriff bereitgestellten Zugriffsstation kann dadurch erleichtert werden, dass das Lagerverwaltungssystem dazu ausgestaltet ist, die Position des wenigstens einen Kommissionierwagens und/oder des Blickfanggebers des wenigstens einen Kommissionierwagens zu ermitteln. Hierzu können beispielsweise Positionserfassungsmittel, beispielsweise bekannte Trackingsysteme verwendet werden.

Das Lagerverwaltungssystem ist bevorzugt dazu ausgestaltet, eine oder mehrere Lagereinheiten in einer vorbestimmten Zone um eine ermittelte Position eines Kommissionierwagens so zu steuern, dass einzelne Artikel der Zusammenstellung dieses Kommissionierwagens in mehr als einer Zugriffsstation der Zone gleichzeitig bereitgestellt werden. Eine solche Ausgestaltung kann dazu verwendet werden, Artikel für einen Kommissionierwagen bereitzustellen, wenn sich dieser Kommissionierwagen den Zugriffsstationen nähert. Gemäß einer weiteren Verbesserung kann das Lagerverwaltungssystem dazu ausgestaltet sein, dass wenn sich die vom Lagerverwaltungssystem ermittelten Positionen mehrerer Kommissionierwagen in einer vorbestimmten Zone befinden, die Lagereinheiten dieser Zone so zu steuern, dass einzelne Artikel von jeder der Zusammenstellungen dieser Kommissionierwagen gleichzeitig in unterschiedlichen Zugriffsstationen bereitgestellt werden.

Das Lagerverwaltungssystem kann dazu ausgestaltet sein, die Farbe eines Anzeigebereichs eines Blickfanggebers ortsabhängig umzuschalten. Hierbei kann ein Blickfanggeber eines Kommissionierwagens und/oder einer Zugriffsstation gemeint sein. Darüber hinaus kann auch die Farbe eines von einem Kommissionierer tragbaren Informationsgebers ortsabhängig umgeschaltet werden.

Gemäß einer weiteren Verbesserung des Lagerverwaltungssystems kann dieses dazu ausgestaltet sein, die Anzeigebereiche der Blickfanggeber einer Mehrzahl von Kommissionierwagen automatisch auf jeweils unterschiedliche Farben umzuschalten. Das Lagerverwaltungssystem kann insbesondere dazu ausgestaltet sein, die Anzeigebereiche der Blickfanggeber einer Mehrzahl von solchen Kommissionierwagen automatisch auf jeweils unterschiedliche Farben umzuschalten, die sich innerhalb einer vorbestimmten, bevorzugt dynamisch konfigurierbaren, Kommissionierzone befinden. Auf diese Weise können Kollisionen vermieden werden. Mit anderen Worten kann verhindert werden, dass versehentlich gleiche Farben für unterschiedliche Zusammenstellungen verwendet werden. Eine solche Verhinderung von Kollisionen kann insbesondere in einer vorbestimmten Kommissionierzone stattfinden. Innerhalb einer Kommissionierzone wird die Anzahl der vergebenen Farben möglichst geringgehalten. Bei einer geringen Zahl von Farben kann es leichter sein, möglichst einfach zu unterscheidende Farben auszuwählen.

Das Lagerverwaltungssystem ist bevorzugt dazu ausgestaltet, die wenigstens eine Kommissionierzone mittels Geofencing zu bestimmen. Durch Geofencing können virtuelle Bereiche bestimmt und voneinander abgegrenzt sein.

Mehrere hintereinander angeordnete Kommissionierzonen können eine Kommissionierstrecke bilden. Eine solche Kommissionierstrecke kann durch die zeitliche Abfolge derjenigen Kommissionierzonen bestimmt sein, in denen die Artikel der Zusammenstellung gleichzeitig zum Zugriff bereitgestellt werden. Eine Kommissionierzone kann ein räumlicher Bereich sein, der mehrere Zugriffsstationen umfasst, die einen gleichzeitigen Zugriff auf Artikel einer Zusammenstellung erlauben. Somit kann ein Kommissionierer nacheinander mehrere Kommissionierzonen abarbeiten, indem er den Kommissionierwagen in die einzelnen Kommissionierzonen schiebt. Bevorzugt umfasst jede Kommissionierzone wenigstens eine Lagereinheit oder wenigstens eine Mehrzahl von Lagereinheiten.

Entlang der Kommissionierstrecke können die Lagereinheiten angeordnet sein, die die Artikel der Zusammenstellung enthalten. Eine Größe der Kommissionierzone kann sich nach ergonomischen Gesichtspunkten bestimmen. Beispielsweise danach, dass Anzeigebereiche der Blickfanggeber zu erkennen sind und/oder dass Lagereinheiten mit einem Sammelwagen erreichbar sind. Die Größe einer Kommissionierzone kann auch danach bestimmt sein, wie viele Kommissionierwagen gleichzeitig in dieser angeordnet sein sollen. Bevorzugt weist eine Kommissionierzone eine Länge von weniger als 50 Metern, besonders bevorzugt eine Länge von weniger als 25 Metern auf. Entlang einer Kommissionierstrecke aufeinanderfolgende Kommissionierzonen können sich überlappen. Bevorzugt überlappen sich jedoch zwei aufeinanderfolgende Kommissionierzonen nicht.

Erfindungsgemäß ist das Lagerverwaltungssystem dazu ausgestaltet, in Abhängigkeit von der Zuordnung des Kommissionierers zu einem Kommissionierwagen an einem Anzeigebereich mit ferngesteuert umschaltbarer Farbe eines am Körper des Kommissionierers tragbaren Informationsgebers und an einem Anzeigebereich eines Blickfanggebers eines Kommissionierwagens automatisch die gleiche Farbe einzustellen. Hierdurch kann ein Kommissionierer auf einfache Weise den ihm zugewiesenen Kommissionierwagen ausfindig machen. Dem Kommissionierer ist in der Regel eine Zusammenstellung von Kommissionieraufträgen zugeordnet. Da eine Zusammenstellung von Kommissionieraufträgen einem Kommissionierwagen zugeordnet ist, ist einem Kommissionierer automatisch ein Kommissionierwagen zugeordnet. Um die gleiche Farbe am Anzeigebereich des Informationsgebers und am Anzeigebereich des Blickfanggebers des Kommissionierwagens einzustellen, ist wenigstens einer der beiden Anzeigebereiche farbveränderlich. Um eine hohe Flexibilität des Lagerverwaltungssystems zu gewährleisten, sind bevorzugt beide Anzeigebereiche farbveränderlich.

Gemäß einer weiteren vorteilhaften Ausgestaltung kann das Lagerverwaltungssystem dazu ausgestaltet sein, bei einer Vielzahl von Kommissionierern mit jeweils einem Informationsgeber und einer Vielzahl von Kommissionierwagen mit jeweils einem Blickfanggeber, in Abhängigkeit von einer Zuordnung eines Kommissionierers zu jeweils einem Kommissionierwagen am Informationsgeber des Kommissionierers und an einem Anzeigebereich eines Blickfanggebers eines Kommissionierwagens automatisch die gleiche Farbe einzustellen. Dadurch kann jeder Kommissionierer den ihm zugewiesenen Kommissionierwagen leicht auffinden. Verwechslungen können dadurch vermieden werden.

Um das Lagerverwaltungssystem weiter zu verbessern, kann es dazu ausgestaltet sein, automatisch die Position eines am Körper eines Kommissionierers tragbaren Informationsgebers, insbesondere relativ zu einer Zugriffsstation und/oder zu einem Kommissionierwagen, zu ermitteln und die Farbe des Anzeigebereichs des Informationsgebers abhängig von der Position zu verändern. In Abhängigkeit von der Position des Kommissionierers kann dem Kommissionierer also ein bestimmter Kommissionierauftrag zugeordnet werden.

Der Informationsgeber weist bevorzugt wenigstens einen Positionsgeber auf, damit das Lagerverwaltungssystem die Position des Informationsgebers und damit die Position des Kommissionierers erfassen kann. Alternativ dazu kann der Positionsgeber auch separat vom Informationsgeber gebildet sein. So kann er beispielsweise ein separates tragbares Gerät sein oder in einem solchen Gerät integriert sein. Als weiterer Alternative oder zusätzliche Möglichkeit der Bestimmung der Position des Kommissionierers kann auch wenigstens ein optisches System verwendet werden. Die Position kann zum Beispiel dabei durch wenigstens ein Kamerasystem mit einer automatischen Erkennung des Kommissionierers bestimmt werden.

Das Lagerverwaltungssystem ist bevorzugt dazu ausgestaltet, die Farbe des Anzeigebereichs eines Informationsgebers automatisch an die Farbe eines Blickfanggebers einer Zugriffsstation anzupassen, wenn sich der Informationsgeber in einer vorbestimmten Position relativ zu der Zugriffsstation befindet. Durch diese Ausgestaltung kann es möglich sein, einem Kommissionierer einen Kommissionierauftrag zuzuordnen, wenn sich dieser einer Zugriffsstation nähert. Dies kann besonders für den Fall von Vorteil sein, wenn ein Kommissionierer, der bereits einem Kommissionierauftrag zugeordnet ist, und auf eine Zugriffsstation zugreift, Hilfe benötigt.

Solch ein Fall kann zum Beispiel eintreten, wenn eine besonders große Anzahl von Artikeln, sperrige Artikel oder schwere Artikel bewegt werden müssen. In einer solchen Situation kann es zu einem Stau von Kommissionierern und/oder Kommissionierwagen kommen. Dann kann wenigstens ein weiterer Kommissionierer dem erstgenannten Kommissionierer zu Hilfe kommen. Insbesondere kann wenigstens ein nachfolgen der Kommissionierer dem erstgenannten Kommissionierer zu Hilfe kommen. Der wenigstens eine weitere Kommissionierer kann dabei ursprünglich einer anderen Zusammenstellung bzw. einem anderen Kommissionierauftrag zugeordnet sein. Nähert sich der wenigstens eine weitere Kommissionierer dann der Zugriffsstation des ersten Kommissionierers, kann zumindest vorübergehend die Zusammenstellung bzw. der Kommissionierauftrag des Kommissionierers auch dem wenigstens einen weiteren Kommissionierer zugeordnet werden. In dieser Zeit wird den dann wenigstens zwei Kommissionierern die gleiche Farbe an den Anzeigebereichen ihrer Informationsgeber angezeigt. Die wenigstens zwei Kommissionierer können dann gemeinsam die Zusammenstellung bzw. den Kommissionierauftrag des ersten Kommissionierers zumindest teilweise abarbeiten. Ist keine Hilfe mehr erforderlich, kann der wenigstens eine weitere Kommissionierer die Zugriffsstation verlassen, wobei die Farbe des Anzeigebereichs seines Informationsgebers wieder die seiner ursprünglichen Zusammenstellung bzw. die seines ursprünglichen Kommissionierauftrags annehmen kann. Auf diese Weise kann ein Stau schnell wieder aufgelöst werden.

Um die zuvor beschriebene positionsabhängige Umschaltung der Farbe des Anzeigebereichs des Informationsgebers eines Kommissionierers zu erleichtern, ist das Lagerverwaltungssystem bevorzugt dazu ausgestaltet, vor einer Zugriffsstation eine Zugriffszone mittels Geofencing zu bestimmen und die Farbe des Anzeigebereichs eines sich innerhalb der Zugriffszone befindlichen Informationsgebers automatisch auf die Farbe des Anzeigebereichs des Blickfanggebers der Zugriffsstation dieser Zugriffszone zu setzen. Mit anderen Worten wird die Farbe des Anzeigebereichs des Informationsgebers auf die Farbe des Blickfanggebers der Zugriffsstation umgeschaltet, sobald der Kommissionierer die Zugriffszone betritt. Eine weiter oben genannte Kommissionierzone kann mehrere Zugriffszonen beinhalten.

Eine Zugriffszone kann auch vor einer Vielzahl von Zugriffsstationen durch Geofencing bestimmt sein. Alternativ dazu kann vor jeder Zugriffsstation genau eine Zugriffszone bestimmt sein.

Das Lagerverwaltungssystem kann dazu ausgestaltet sein, die auf die Farbe des Blickfanggebers der Zugriffsstation gesetzte Farbe des Anzeigebereichs des Informationsgebers wieder auf eine zuvor eingestellte Farbe zurückzusetzen, wenn sämtliche Artikel der Zusammenstellung desjenigen Kommissionierwagens aus der Zugriffsstation entnommen sind, dessen Anzeigebereich dieselbe Farbe aufweist, wie der Anzeigebereich des Informationsgebers vor dem Zurückschalten.

Mit anderen Worten kann ein Kommissionierer, der vorübergehend eine andere Zusammenstellung abgearbeitet hat, nach dem Zurückschalten der Farbe des Anzeigebereichs seines Informationsgebers wieder zu seiner ursprünglichen Zusammenstellung zurückkehren und diese weiter abarbeiten.

Bevorzugt ist das Lagerverwaltungssystem dazu ausgestaltet, ein Entnahmequittiersignal zu empfangen, das repräsentativ für die Entnahme sämtlicher Artikel einer Zusammenstellung aus einer Zugriffsstation ist. die Zugriffsstation und/oder der Informationsgeber können einen Quittiergeber dafür aufweisen. Der Quittiergeber kann beispielsweise mechanisch, insbesondere ein Schalter oder ein berührungsempfindliches Element, beispielsweise ein Touchscreen, sein. Die Betätigung des Quittiergebers kann automatisch das Entnahmequittiersignal erzeugen.

Das Lagerverwaltungssystem kann zudem dazu ausgestaltet sein, ein Ablagequittiersignal zu empfangen, das repräsentativ für die Ablage der einer Zugriffsstation entnommenen Artikel auf einem Kommissionierwagen ist. Hierzu können der Kommissionierwagen und/oder der Informationsgeber einen Quittiergeber aufweisen, dessen Betätigung automatisch das Ablagequittiersignal erzeugt. Gemäß einer vorteilhaften Ausgestaltung können der Quittiergeber für das Entnahmequittiersignal und der Quittiergeber für das Ablagequittiersignal identisch sein. Mit anderen Worten wird der Quittiergeber für das Entnahmequittiersignal automatisch zum Quittiergeber für das Ablagequittiersignal, wenn die Entnahme quittiert ist und umgekehrt, wenn die Ablage quittiert ist.

Gemäß einer weiteren vorteilhaften Ausgestaltung kann das Lagerverwaltungssystem dazu ausgestaltet sein, an einem von einem Kommissionierer tragbaren Wearable ein optisches Signal auszugeben, wobei das Signal repräsentativ ist für eine Position einer, insbesondere einem Kommissionierauftrag zugeordneten, Handling Unit auf dem Kommissionierwagen, in die ein aus einer Zugriffsstation entnommener Artikel abzulegen ist, und/oder für eine in der Handling Unit des Kommissionierwagens abzulegende Anzahl und/oder Art der Artikel. Mit anderen Worten kann die Handling Unit dem Kommissionierer anzeigen, in welche Handling Unit des Kommissionierwagens Artikel abgelegt werden sollen. Darüber hinaus kann die Anzahl und/oder die Art der Artikel angezeigt werden.

Das Signal kann durch eine Farbe repräsentiert sein oder durch die Anzeige wenigstens eines Zeichens, beispielsweise wenigstens eines Pfeils. Der Informationsgeber kann in das Wearable integriert sein. Alternativ dazu kann das Wearable ein separates Element sein. Lediglich beispielhaft sei hier die Möglichkeit genannt, dass der Informationsgeber am Handgelenk tragbar ist und das Wearable eine Brillenform aufweist, wobei der Kommissionierer das Signal dann beim Tragen der Brille sehen kann. Eine solche Brille kann beispielsweise eine Augmented-Reality-Brille sein. Das Wearable kann die Handling Unit für einen Kommissionierauftrag der Zusammenstellung optisch identifizieren. Selbstverständlich kann das genannte Wearable auch ein an einer anderen Stelle des Körpers tragbares Gerät sein. Beispielsweise am Handgelenk, am Oberarm, am Unterarm oder in der Hand. Selbiges gilt ebenfalls für den Informationsgeber.

Das erfindungsgemäße Kommissionier- und Lagersystem kann dadurch weiter verbessert werden, dass es eine Mehrzahl von Kommissionierwägen mit jeweils einem Blickfanggeber, insbesondere mit jeweils einem farblich femgesteuert umschaltbaren Anzeigebereich umfasst.

Bevorzugt umfasst das erfindungsgemäße Kommissionier- und Lagersystem eine Mehrzahl von Lagereinheiten mit jeweils einem Blickfanggeber, insbesondere mit jeweils einem Blickfanggeber je Zugriffsstation. Dabei ist bevorzugt jeder Blickfanggeber mit einem Anzeigebereich mit einer vom Lagerverwaltungssystem ferngesteuert umschaltbaren Farbe versehen.

Das Kommissionier- und Lagersystem kann wenigstens einen als Wearable ausgestalteten Informationsgeber umfassen, der einen Bereich mit ferngesteuert umschaltbarer Farbe aufweist und über das Lagerverwaltungssystem mit den Blickfanggebern des wenigstens einen Kommissionierwagens und der wenigstens einen Lagereinheit datenübertragend verbunden ist.

Bevorzugt umfasst das Kommissionier- und Lagersystem eine Mehrzahl von Blickfanggebern für Kommissionierwagen, wobei die Blickfanggeber werkzeuglos wiederholt an unterschiedlichen Kommissionierwagen befestigbar ausgestaltet sind. Dadurch kann ein Kommissionierwagen schnell und einfach mit einer Blickfangleuchte versehen und für das Kommissionier- und Lagersystem ausgerüstet werden.

Bevorzugt umfasst das Kommissionier- und Lagersystem eine vom Lagerverwaltungssystem mittels Geofencing bestimmte, für einen Kommissionierer zum Zugriff auf die Zugriffsstation einer Lagereinheit zugängliche, vor der Zugriffsstation angeordnete Zugriffszone, und einen vom Kommissionierer tragbaren Positionsgeber zur Bestimmung der Position des Kommissionierers relativ zur Zugriffszone. Dadurch kann die Position des Kommissionierers bestimmt und insbesondere dessen Anwesenheit in einer Zugriffszone ermittelt werden. Insbesondere kann auch eine Identifikation des Positionsgebers und damit des Kommissionierers ermittelt werden. Der Positionsgeber kann Teil eines Wearables oder des Informationsgebers sein. Er kann jedoch auch durch ein separates Mittel gebildet sein.

Mit der Bezeichnung "relativ zur Zugriffszone" kann im einfachsten Fall eine Unterscheidung zwischen einer Position innerhalb und einer Position außerhalb der Zugriffszone gemeint sein. Alternativ oder zusätzlich kann jedoch auch die genaue Position relativ zur Zugriffszone erfasst werden. Unter einer genauen Position ist dabei eine ausreichend genaue Position zu verstehen. Diese kann beispielsweise mit der Genauigkeit von einem Meter, einem halben Meter oder noch genauer sein.

Die Positionsbestimmung kann beispielsweise mittels Triangulation erfolgen. Bevorzugt weist das Kommissionier- und Lagersystem wenigstens ein auf elektromagnetischen Wellen und/oder auf Ultraschall basiertes Positionserfassungssystem zum Geofencing auf. Das Positionserfassungssystem kann wenigstens einen vom Kommissionierer tragbaren, insbesondere als Wearable ausgestalteten, Positionsgeber umfassen.

Im Folgenden ist die Erfindung beispielhaft anhand vorteilhafter Ausführungsformen mit Bezug auf die Zeichnungen näher erläutert. Die bei der Ausführungsform beispielhaft dargestellte Merkmalskombination kann nach Maßgabe der obigen Ausführungen für einen bestimmten Anwendungsfall durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieses Merkmals in einem Anwendungsfall nicht ankommt.

In den Zeichnungen werden für Elemente gleicher Funktion und/oder gleichen Aufbaus stets dieselben Bezugszeichen verwendet.

Es zeigen:
- Fig. 1: eine vorteilhafte Ausführungsform eines Lagers mit einem erfindungsgemäßen Kommissionier- und Lagersystem;
- Fig. 2: einen Kommissionierer mit einem tragbaren Informationsgeber;
- Fig. 3: eine Lagereinheit mit einer Zugriffstation;
- Fig. 4: einen Kommissionierwagen; und
- Fig. 5: die Schritte eines erfindungsgemäßen Verfahrens.

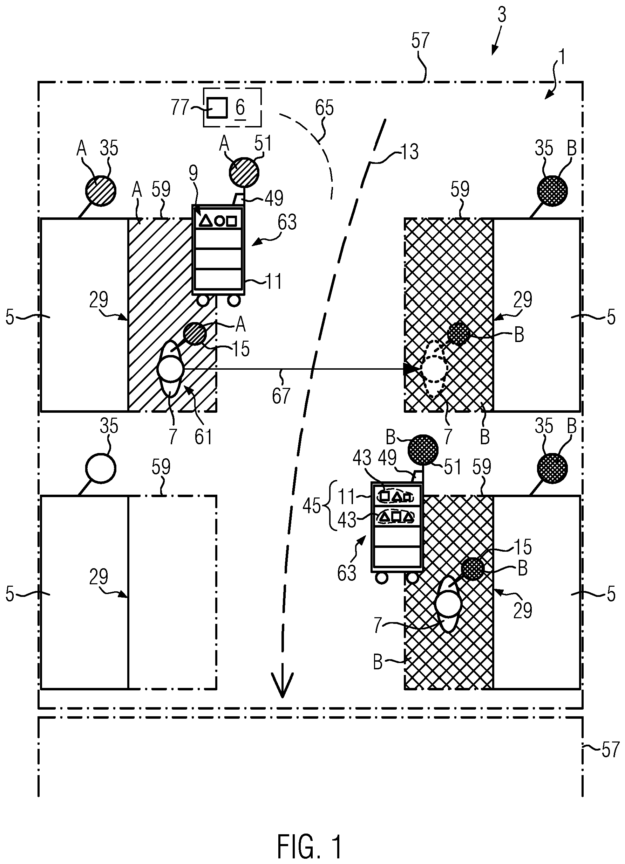

Im Folgenden ist eine vorteilhafte Ausführungsform eines erfindungsgemäßen Kommissionier- und Lagersystems 1 mit Bezug auf die Fig. 1 näher erläutert.

Das Kommissionier- und Lagersystem 1 kann insbesondere für ein Lager 3, welches wenigstens eine Lagereinheit 5 umfasst, verwendet werden. Das Kommissionier- und Lagersystem 1 umfasst bevorzugt wenigstens ein Lagerverwaltungssystem 6, welches zur Überwachung und/oder Steuerung von zumindest einem Teil des Kommissionier- und Lagersystems 1 ausgestaltet ist. Das Lagerverwaltungssystem 6 ist bevorzugt mit den zu überwachenden und/oder steuernden Komponenten verbunden, insbesondere datenübertragend verbunden. Das Lagerverwaltungssystem kann insbesondere einen oder mehrere, insbesondere miteinander vernetzte, Computer und/oder Software umfassen.

Das Lagerverwaltungssystem 6 ist bevorzugt mit einem Computerprogrammprodukt 77 versehen, welches Befehle enthält, durch die das Lagerverwaltungssystem 6 zumindest teilweise steuerbar ist.

Die Lagereinheiten 5 können beispielsweise Lagersysteme wie Lagerlifte, Regale, Paternosterlager, Umlaufregallager oder andere Einheiten sein. Auch kann eine Zugriffsstelle einer Transportbahn oder eines Transportweges als Lagereinheit 5 aufgefasst werden. Voraussetzung ist lediglich, dass eine Bedienperson 7, also ein Kommissionierer 7, an einer Lagereinheit 5 Artikel 9 aus der Lagereinheit 5 entnehmen oder an diese übergeben kann. Im Bereich der Lagerlogistik ist hierbei häufig von Beschickung und/oder der Entnahme von Lagergut die Rede. Eine Bedienperson 7 wird häufig auch als "Picker" 7 bezeichnet. Artikel 9 werden häufig als "Lagergut" bezeichnet. Die Beschickung und/oder Entnahme von Artikeln 9 in eine Lagereinheit 5 oder aus dieser heraus, wird im Folgenden als "Zugriff" bezeichnet.

Einem Kommissionierer 7 kann ein Kommissionierauftrag 43 zugewiesen werden. Ein Kommissionierauftrag beinhaltet in der Regel eine Auflistung von Artikeln 9. Diese Artikel 9 sind aus einer oder mehreren Lagereinheiten 5 zu entnehmen, also zu "picken" und in einem Sammelbehälter, einem sogenannten Kommissionierwagen 11, zu sammeln. Umgekehrt ist es ebenso möglich, dass ein Kommissionierauftrag 43 eine Auflistung von Artikeln 9 enthält, welche, insbesondere aus einem Kommissionierwagen 11 heraus an eine oder mehrere Lagereinheiten 5 zu übergeben sind.

Ein Kommissionierauftrag 43 enthält in der Regel neben einer Angabe über den Artikeltyp auch eine Angabe über die Anzahl der Artikel 9, welche ein- und/oder ausgelagert werden sollen. Ein oder mehrere Kommissionieraufträge 43 können in einer Zusammenstellung 45 zusammengefasst sein.

Ein Kommissionierer 7 kann eine Zusammenstellung 45 oder einen Kommissionierauftrag 43 dadurch abarbeiten, dass er eine oder mehrere Lagereinheiten 5 aufsucht und auf die Zugriffstationen 29 dieser Lagereinheiten 5 zugreift. Muss der Kommissionierer 7 dabei mehrere Lagereinheiten 5 aufsuchen, kann sich aus der Bewegung des Kommissionierers 7 innerhalb des Lagers 3 eine Kommissionierstrecke 13 ergeben.

Um das Kommissionieren zu erleichtern kann ein Kommissionierer 7 beim Abarbeiten einer Zusammenstellung 45 oder eines Kommissionierauftrags 43 durch technische Hilfsmittel geführt werden. Das Kommissionier- und Lagersystem 1 nutzt dabei eine farbliche Kennzeichnung um den Kommissionierer 7 visuell zu führen. Eine farbliche Kennzeichnung ist von Vorteil, da diese im Vergleich zu Text oder Zahlen intuitiv verstanden werden kann.

Beispielsweise kann jeder Zusammenstellung 45 eine Farbe zugeordnet werden. Alternativ dazu kann auch einem Kommissionierauftrag 43 eine Farbe zugeordnet sein. Bevorzugt soll jedoch eine Zuordnung von Farben zu Zusammenstellungen 45 stattfinden. Verschiedene Farben können also verschiedene Zusammenstellungen 45 kennzeichnen. Die Farbe, die eine Zusammenstellung 45 kennzeichnet, kann an verschiedenen Stellen im Lager 3 angezeigt werden, um einen Kommissionierer 7 beim Kommissionieren zu unterstützen.

Die zu einem Zusammenstellung 45 gehörende Farbe kann insbesondere an Blickfanggebern 35, 51 angezeigt werden. Ein Blickfanggeber 35, 51 ist bevorzugt eine weithin sichtbare Lichtquelle, wobei die Lichtquelle bevorzugt selbstleuchtend ist. Alternativ dazu kann ein Blickfanggeber auch als eine passive Lichtquelle, also eine von einer aktiven Lichtquelle zum Leuchten angeregte Lichtquelle, sein. Die zu einer Zusammenstellung 45 gehörende Farbe kann jedoch auch durch andere Vorrichtungen, beispielsweise Displays, angezeigt werden.

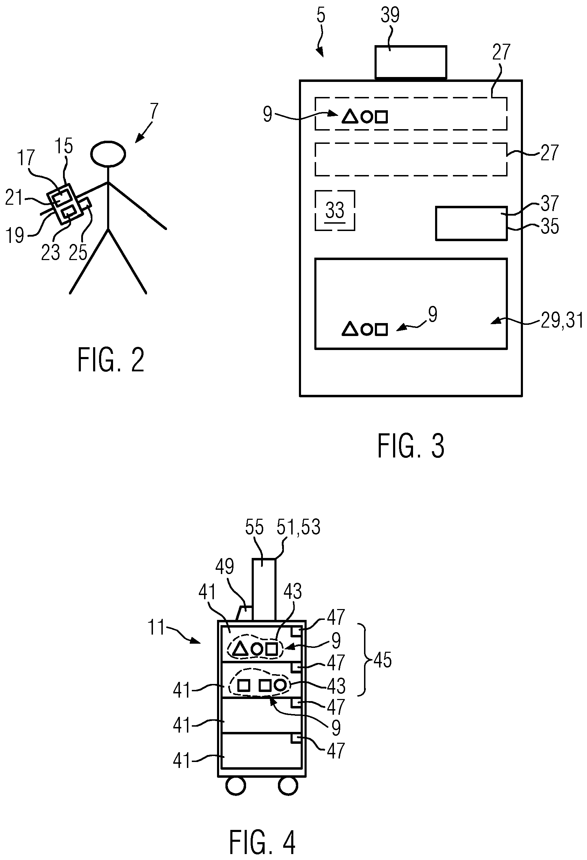

Eine Lagereinheit 5, ein Kommissionierwagen 11 sowie ein Kommissionierer 7 mit einem tragbaren Informationsgeber 15 sind in den Figuren 2 bis 4 schematisch dargestellt. Auf diese ist im Folgenden kurz eingegangen.

Der Kommissionierer 7 ist mit wenigstens einem tragbaren Informationsgeber 15 ausgestattet. Der tragbare Informationsgeber 15 weist wenigstens einen Anzeigebereich 17 auf, dessen Farbe ferngesteuert umschaltbar ist.

Der Informationsgeber 15 ist bevorzugt in ein Wearable 19 integriert, welches in Fig. 2 lediglich beispielhaft als ein am Arm tragbares Gerät dargestellt ist. Bevorzugt ist das Wearable 19 auch dazu ausgestaltet, ein optisches Signal 21 für den Kommissionierer 7 auszugeben. Lediglich beispielhaft ist das optische Signal 21 als Teil des Anzeigebereichs 17 des Informationsgebers 15 dargestellt. In diesem Fall kann der Anzeigebereich 17 das Signal 21 darstellen. Alternativ dazu kann das optische Signal 21 auch an einer anderen Vorrichtung, insbesondere einer Anzeigevorrichtung am Informationsgeber 15 dargestellt werden. Eine weitere Alternative besteht darin, ein separates Wearable 19 vorzusehen, welches separat vom Informationsgeber 15 tragbar ist und welches dazu ausgestaltet ist, das optische Signal 21 auszugeben. Beispielsweise kann das separate Wearable (nicht gezeigt) eine Brillenform aufweisen.

Der Informationsgeber 15 weist bevorzugt auch wenigstens einen Quittiergeber 23 auf, an dem die Entnahme und/oder die Ablage eines Artikels quittierbar ist. Der Quittiergeber 23 kann ein mechanischer Schalter, ein berührungsempfindlicher Schalter, beispielsweise als Teil eines Touchdisplays, oder auch Barcodeleser oder anderes Eingabegerät sein. Ebenfalls kann es möglich sein, den Anzeigebereich 17 des Informationsgebers 15 berührungsempfindlich zu gestalten, so dass dieser gleichzeitig der Quittiergeber 23 sein kann. Der Quittiergeber 23 kann auch an einem separaten Gerät, insbesondere ein am Körper tragbares Gerät, ausgestaltet sein.

Bevorzugt trägt der Kommissionierer 7 wenigstens einen Positionsgeber 25. Der Positionsgeber 25 kann Teil des Informationsgebers 15 sein. Alternativ dazu kann er auch separat vom Informationsgeber 15 gebildet sein. Bevorzugt ist der Positionsgeber 25 am Körper des Kommissionierers 7 tragbar.

Der Informationsgeber 15, der Quittiergeber 23 und/oder der Positionsgeber 25 können mit dem Lagerverwaltungssystem 6 datenübertragend, insbesondere drahtlos datenübertragend, verbunden sein.

Ein Beispiel für eine Lagereinheit 5 ist schematisch in Fig. 3 dargestellt. Die Lagereinheit 5 kann eine Vielzahl von Lagerplätzen 27 aufweisen, welche in Fig. 3 lediglich gestrichelt angedeutet sind. Artikel 9 aus den Lagerplätzen 27 können zu einer Zugriffsstation 29 bewegt werden, oder aus der Zugriffsstation 29 zu den Lagerplätzen 27 hin bewegt werden. Die Zugriffsstation 29 kann insbesondere eine Beschickungs- und/oder Entnahmestation 31 sein.

Die Lagereinheit 5, insbesondere eine Steuereinrichtung 33 der Lagereinheit 5 ist bevorzugt datenübertragend mit dem Lagerverwaltungssystem 6 verbunden.

Die Zugriffsstation 29 ist mit einem Blickfanggeber 35 versehen. Der Blickfanggeber 35 ist in der Nähe der Zugriffsstation 29 angeordnet, so dass er visuell der Zugriffsstation 29 zuzuordnen ist.

Der Blickfanggeber 35 weist einen Anzeigebereich 37 auf, dessen Farbe vom Lagerverwaltungssystem 6 ferngesteuert umschaltbar ist. Dazu kann der Blickfanggeber 35 direkt mit dem Lagerverwaltungssystem 6 oder indirekt über die Steuereinrichtung 33 der Lagereinheit 5 datenübertragend verbunden sein.

Der Anzeigebereich 37 kann ein farblich veränderbares Leuchtmittel oder eine Anzeige, insbesondere ein Display, sein, welches zur Darstellung verschiedener Farben ausgestaltet ist.

Die Lagereinheit 5 kann mit einem Positionserfassungssystem 39 versehen sein, welches zur Erfassung der Positionen von Positionsgebern 25, 49 ausgestaltet ist. Das Positionserfassungssystem 39 ist lediglich beispielhaft auf einer Lagereinheit 5 dargestellt. Das Positionserfassungssystem 39 kann unabhängig von Lagereinheiten 5 Teil des Kommissionier- und Lagersystems 1 sein und innerhalb des Lagers 3 angeordnet sein.

Das Positionserfassungssystem 39 kann aus einer Vielzahl von Sende- und/oder Empfangseinrichtungen bestehen, die dazu geeignet sind, wenigstens einen Positionsgeber 25, 49 zu erfassen und dessen Position zu bestimmen. Beispielsweise kann das Positionserfassungssystem 39 hierzu Triangulation verwenden. Das Positionserfassungssystem 39 kann dazu verwenden werden, mittels Geofencing Zonen innerhalb des Kommissionier- und Lagersystems 1 bzw. des Lagers 3 zu definieren. Insbesondere können Kommissionierzonen und Zugriffszonen bestimmt werden. Hierauf wird später eingegangen.

In Fig. 4 ist schematisch ein Kommissionierwagen 11 dargestellt. Der Kommissionierwagen 11 dient zum Sammeln und zum Transport von Artikeln 9. Hierzu weist der Kommissionierwagen 11 Lagergutbehälter, sogenannte Handling Units 41 auf. Lediglich beispielhaft sind in Fig. 4 die Handling Units 41 als Fächer im Kommissionierwagen 11 dargestellt.

Bevorzugt ist eine Handling Unit 41 genau einem Kommissionierauftrag 43 zugeordnet. Der Kommissionierauftrag 43 ist lediglich schematisch als eine Zusammenstellung von Artikeln 9 in Fig. 4 dargestellt. Alternativ dazu kann sich ein Kommissionierauftrag 43 auch über mehrere Handling Units 41 erstrecken, wenn die Kapazität einer Handling Unit 41 für einen Kommissionierauftrag 43 nicht ausreicht.

Mehrere, unterschiedliche Kommissionieraufträge 43 können zu einer Zusammenstellung 45 von Kommissionieraufträgen 43 zusammengefasst sein. Ein Kommissionierwagen 11 ist bevorzugt genau einer Zusammenstellung 45 zugeordnet. Die beiden unterschiedlichen Kommissionieraufträge 43 sind in Fig. 4 durch die unterschiedlichen in ihnen enthaltenen Artikel 9 angedeutet. Jede der Handling Units 41 kann mit einer Anzeigevorrichtung 47 versehen sein, welche dem Kommissionierer 7 anzeigen kann, in welche Handling Unit 41 Artikel 9 abzulegen sind, oder aus welcher Handling Unit 41 Artikel 9 zu entnehmen sind. Die Anzeigevorrichtungen 47 können bevorzugt eine Farbe und/oder Zeichen darstellen.

Der Kommissionierwagen 11 ist bevorzugt mit einem Positionsgeber 49 versehen, anhand dessen die Position des Kommissionierwagens 11 innerhalb des Lagers 3 bestimmbar ist. Anhand des Positionsgebers 49 kann bevorzugt auch eine Identifikation des Kommissionierwagens 11 an das Lagerverwaltungssystem 6 mitgeteilt werden. Der Positionsgeber 49 ist bevorzugt durch das Positionserfassungssystem 39 erfassbar.

Der Kommissionierwagen 11 ist mit einem Blickfanggeber 51 versehen, welcher insbesondere durch eine wiederholt und werkzeuglos anbringbare Blickfangleuchte 53 gebildet ist. Der Blickfanggeber 51 weist einen Anzeigebereich 55 auf, dessen Farbe ferngesteuert umschaltbar ist. Insbesondere kann die Farbe durch das Lagerverwaltungssystem 6 ferngesteuert umgeschaltet werden. Dazu ist der Blickfanggeber 51 datenübertragend mit dem Lagerverwaltungssystem 6 verbunden. Dies kann insbesondere drahtlos erfolgen.

Der Blickfanggeber 51, insbesondere dessen Anzeigebereich 55, ist bevorzugt von jeder Seite des Kommissionierwagens 11 aus sichtbar. Dadurch kann der Kommissionierer 7 einen ihm zugewiesen Kommissionierwagen 11 schnell auffinden bzw. erkennen.

Der Blickfanggeber 51 weist bevorzugt ein Lesegerät für ein Identifikationsmittel des Kommissionierwagens 11 auf. Der Blickfanggeber 51 kann dadurch eine Kennung des Kommissionierwagens 11, an dem der Blickfanggeber 51 angebracht ist, auslesen und an das Lagerverwaltungssystem 6 weiterleiten. Dadurch können der Kommissionierwagen 11 und der Blickfanggeber 51 für das Lagerverwaltungssystem 6 eine Einheit bilden. Das Lesegerät kann beispielsweise ein Strichcodeleser oder ein Lesegerät zum Auslesen von RFID-Tags sein. Entsprechend kann das Identifikationsmittel am Kommissionierwagen 11 durch einen Strichcode, einen RFID-Tag oder ein anderes geeignetes Mittel gebildet sein.

Der Kommissionierwagen 11, insbesondere der Blickfanggeber 51 des Kommissionierwagens 11 kann mit wenigstens einer Projektionsvorrichtung (nicht dargestellt) versehen sein, die dazu ausgestaltet ist, ein Lichtbild zu erzeugen, welches dazu geeignet ist, eine Richtung anzuzeigen. Beispielsweise kann ein Pfeil erzeugt werden. Die Projektionsvorrichtung kann insbesondere nach unten projizieren, d.h., auf einen Boden. So kann in Abhängigkeit einer Kommunikation mit dem Lagerverwaltungssystem 6 die Richtung zur nächsten für einen Zugriff bereiten Zugriffsstation 29 angezeigt werden. Dies kann insbesondere in großen Lagerhallen sinnvoll sein, wo unter Umständen große Entfernungen zurückgelegt werden müssen und ein Blickfanggeber 35 der Zugriffsstation 29 nicht ohne Weiteres aus der Entfernung erkennbar ist. Die Kommissionierzone 57 kann dann in verschiedene Abschnitte unterteilt sein, die sich über die Fläche der Lagerhalle verteilen und durch die Kommissionierstrecke 13 miteinander verbunden sind.

Im Folgenden ist die Verwendung eines erfindungsgemäßen Lagerverwaltungssystems 6 und eines erfindungsgemäßen Kommissionier- und Lagersystems 1 anhand des in Fig. 1 dargestellten Lagers 3 beschrieben, wobei hierbei auf die mit Bezug auf die Figuren 2 bis 4 beschriebenen Komponenten des Kommissionier- und Lagersystems 1 zurückgegriffen wird.

Die bereits eingangs genannte Kommissionierstrecke 13 kann durch eine zeitliche Abfolge von sogenannten Kommissionierzonen 57 bestimmt sein, in denen Artikel 9 einer Zusammenstellung 45 gleichzeitig zum Zugriff bereitgestellt werden. Eine solche Kommissionierzone 57 ist durch die strichgepunktete Linie in Fig. 1 angedeutet.

Jeder Zugriffsstation 29 ist eine Zugriffszone 59 zugeordnet. Bevorzugt ist eine Zugriffszone 59 vor der Zugriffsstation 29 angeordnet, so dass ein sich in der Zugriffszone 59 befindender Kommissionierer 7 Zugriff auf die Zugriffsstation 29 hat.

Der besseren Übersichtlichkeit halber sind in Fig. 1 Lagereinheiten 5 dargestellt, von denen jede Lagereinheiten 5 genau eine Zugriffsstation 29 aufweist. Beispielsweise können die Lagereinheiten 5 in Fig. 1 ähnlich der mit Bezug auf die Fig. 3 beschriebene Lagereinheit 5 aufgebaut sein. Eine Lagereinheit 5 kann jedoch auch mehrere Zugriffsstation 29 und/oder Zugriffszonen 59 aufweisen.

Die Zugriffszonen 59 können virtuelle Zonen sein. Mit anderen Worten können diese beispielsweise über Geofencing bestimmt sein. Beispielsweise können ein oder mehrere Positionserfassungssysteme 39, insbesondere durch Verbindung mit dem Lagerverwaltungssystem 6, die Zugriffszonen 59 bestimmen.

Da bevorzugt jeder Kommissionierer 7 mit einem Positionsgeber 25 versehen ist, kann erkannt werden, ob ein Kommissionierer 7 sich innerhalb oder außerhalb einer bestimmten Zugriffszone 59 befindet. Hierdurch kann die Position 61 eines Kommissionierers ermittelt werden. Darüber hinaus ist es auch möglich, die Position 61 eines Kommissionierers 7 absolut, d.h. ohne Relation zu einer bestimmten Zugriffsstation 59 zu bestimmen. Positionserfassungssysteme 39, insbesondere solche, welche Triangulation nutzen, können hierzu ausgestaltet sein.

Da bevorzugt auch jeder Kommissionierwagen 11 mit einem Positionsgeber 49 versehen ist, kann bevorzugt auch die Position 63 eines Kommissionierwagens 11 bestimmt werden. Auch hierbei kann es im einfachsten Fall möglich sein, lediglich das Vorhandensein oder Nichtvorhandensein eines Kommissionierwagens 11 innerhalb einer Zugriffszone 59 zu erfassen. Darüber hinaus kann es jedoch auch möglich sein, die Position 63 innerhalb des Lagers 3 zu ermitteln.

Erfindungsgemäß ist vorgesehen, dass wenigstens einer der Blickfanggeber 35 oder 51, also an der Zugriffsstation 29 oder am Kommissionierwagen 11 einen Anzeigebereich 37 oder 55 mit einer umschaltbaren Farbe aufweist. Der Einfachheit halber ist dies im Folgenden anhand von zwei unterschiedlichen Farben A und B erläutert. Selbstverständlich können auch andere Farben verwendet werden oder, insbesondere im Falle von mehreren Kommissionierern 7, mehr als zwei Farben.

Die Farbe A ist in Fig. 1 durch eine einfache Schraffur angedeutet und die Farbe B durch gekreuzte Schraffur. Es ist von Vorteil, wenn sich die beiden Farben A und B deutlich voneinander unterscheiden. Zum Beispiel können hierzu Farbenpaare Rot und Grün oder Gelb und Blau verwendet werden. Hierbei kann es auch von Vorteil sein, wenn bei einer Verwendung von nur zwei Farben A und B, diese beiden Farben zueinander komplementär sind. Beispielsweise können die Komplementärfarben Blau und Gelb, Rot und Cyan oder Grün und Magenta als die Farben A und B verwendet werden. Hierdurch lässt sich eine sehr schnelle und eindeutige Unterscheidung der beiden Farben A und B durch einen Kommissionierer 7 erreichen.

Bevorzugt weisen beide Blickfanggeber 35 und 51 jeweils einen Anzeigebereich 37 und 55 mit automatisch umschaltbarer Farbe A, B auf. Zusätzlich trägt auch der Kommissionierer 7 einen Informationsgeber 15 mit einem Anzeigebereich 17, dessen Farbe ferngesteuert durch das Lagerverwaltungssystem 6 umschaltbar ist.

In dem Kommissionier- und Lagersystem 1 der Fig. 1 sind als bevorzugte Ausführungsformen die Blickfanggeber 35, die Blickfanggeber 51 und die Informationsgeber 15 jeweils mit Anzeigebereichen versehen, deren Farbe automatisch umschaltbar ist.

Die Blickfanggeber 35 und 51 sowie die Informationsgeber 15 sind in Fig. 1 lediglich angedeutet und mit der die jeweilige Farbe repräsentierenden Schraffur gefüllt. Der besseren Übersichtlichkeit halber sind auch die Zugriffszonen 59 mit der Schraffur gefüllt, die der Farbe des Blickfanggebers 35 der entsprechenden Zugriffsstation 29 entspricht.

Zu Beginn einer Kommissionierung, also wenn ein Kommissionierer 7 eine Zusammenstellung 45 oder einen Kommissionierauftrag 43 abarbeiten soll, oder auch am Beginn eines Arbeitstages, wird einem Kommissionierer 7 ein Kommissionierwagen 11 zugeordnet.

In Fig. 1 ist hierzu links oben ein Kommissionierer 7 mit einem Kommissionierwagen 11 dargestellt, wobei beide die Farbe A zeigen. Rechts unten ist ein Kommissionierer 7 mit einem ihm zugehörigen Kommissionierwagen 11 dargestellt, wobei der Informationsgeber 15 und der Blickfanggeber 51 beide die Farbe B zeigen.

So kann ein Kommissionierer 7 bei einem visuellen Abgleich seines Informationsgebers 15, bzw. dessen Anzeigebereichs 17 mit dem Anzeigebereich 55 des Blickfanggebers 51 an seinem Kommissionierwagen 11 schnell und einfach den ihm zugewiesenen Kommissionierwagen 11 identifizieren. Mit dem Kommissionierwagen 11 kann er dann Zugriffsstationen 29 der Lagereinheiten 5 ansteuern, um auf diese zuzugreifen. Dabei sind verschiedene Szenarien vorstellbar.

In einem einfachen Szenario wird ein Artikel 9 für eine Zusammenstellung 45 oder für einen Kommissionierauftrag 43 in einer Zugriffsstation 29 einer Lagereinheit 5 bereitgestellt.

Der Blickfanggeber 35 der entsprechenden Zugriffsstation kann dann durch eine die Zusammenstellung 45 oder eine einen Kommissionierauftrag 43 repräsentierende Farbe A oder B anzeigen. Der Kommissionierer 7 kann die angezeigte Farbe A oder B am Blickfanggeber 35 mit den Farben seines Informationsgebers 15 und/oder des Blickfanggebers 51 seines Kommissionierwagens 11 abgleichen.

Stimmen die Farben überein, wie links oben im Bild bei der Farbe A, kann der Kommissionierer 7 auf die Zugriffsstation 29 zugreifen und Artikel 9 aus ihr entnehmen und in einer Handling Unit 41 seines Kommissionierwagens 11 ablegen. Ebenso kann der Kommissionierer 7 Artikel 9 aus einer Handling Unit 41 seines Kommissionierwagens 11 entnehmen und in der Zugriffsstation 29 ablegen.

Wie bereits oben beschrieben, kann auch jede Handling Unit 41 hierzu mit einer Anzeigevorrichtung 47 versehen sein. Ist der Zugriff beendet, kann der Kommissionierer 7 dies beispielsweise über einen Quittiergeber 23 quittieren. Anschließend kann er sich zu einer Zugriffsstation 29 begeben und seine Zusammenstellung 45 oder seinen Kommissionierauftrag 43 weiter abarbeiten.

Alternativ zum oben beschriebenen Ablauf ist es auch möglich, dass die Position 61 des Kommissionierers 7 und/oder die Position 63 des Kommissionierwagens 11 erfasst wird. Beispielsweise kann eine virtuelle Zone 65 um den Kommissionierwagen 11 herum bestimmt werden.

Überschneidet sich die Zone 65 mit einer Zugriffszone 59 oder liegt eine der Zugriffsstationen 29 innerhalb der Zone 65 um den Kommissionierwagen 11, kann dies die entsprechende Zugriffsstation 29 dazu veranlassen, Artikel 9 für die dem Kommissionierwagen 11 zugeordnete Zusammenstellung 45 bereitzustellen.

Sobald der oder die Artikel 9 bereitgestellt sind, wird die Farbe des Blickfanggebers 35 auf die Farbe des Blickfanggebers 51 umgeschaltet oder umgekehrt. Mit anderen Worten reagieren in diesem Fall die Lagereinheiten 5 auf die Anwesenheit des Kommissionierwagens 11 und stellen die entsprechenden Artikel 9 für diesen Kommissionierwagen 11, bzw. für dessen Kommissionieraufträge 43 oder dessen Zusammenstellung 45, bereit.

Die Erfindung bietet noch weitere Vorteile. So ist beispielsweise die Zuordnung eines Kommissionierers 7 und/oder eines Kommissionierwagens 11 zu einer bestimmten Zusammenstellung 45 oder zu einem bestimmten Kommissionierauftrag 43 zumindest vorübergehend wechselbar. Dies kann durch einen Wechsel der Farbe am Blickfanggeber 51 und/oder am Informationsgeber 15 angezeigt werden.

Um dies zu veranschaulichen, ist in Fig. 1 folgende Situation angedeutet:

Der rechts unten in Fig. 1 dargestellte Kommissionierer 7, dem eine Zusammenstellung 45 oder ein Kommissionierauftrag 43 zugeordnet ist, greift auf eine Zugriffsstation 29 zu. Der Informationsgeber 15, der Blickfanggeber 51 und der Blickfanggeber 35 zeigen alle jeweils die Farbe B an.

Der Kommissionierer 7 greift auf die Zugriffsstation der Lagereinheit 5 zu. Gleichzeitig ist auch die in Fig. 1 oberhalb der zuvor genannten Lagereinheit 5 dargestellte Lagereinheit 5 für einen Zugriff durch diesen Kommissionierer 7 bereit. Folglich zeigt auch der Blickfanggeber 35 dieser Lagereinheit 5 die Farbe B an.

Aufgrund des Umfangs der Zusammenstellung 45 oder des Kommissionierauftrags 43, des Gewichts der Artikel 9 oder der Dringlichkeit der Zusammenstellung 45 oder des Kommissionierauftrags 43 benötigt der Kommissionierer 7 Hilfe.

Er kann nun den zweiten in Fig. 1 dargestellten Kommissionierer 7 bitten, ihm zu helfen. Alternativ kann auch der zweite Kommissionierer 7, dem die Farbe A zugeordnet ist, erkennen, dass der Kommissionierer 7, dem die Farbe B zugeordnet ist, Hilfe benötigt. Selbstverständlich ist es auch möglich, dass dies durch das Lagerverwaltungssystem 6 erkannt und dem Kommissionierer 7, dem die Farbe A zugeordnet ist, mitgeteilt wird.

Der Kommissionierer 7, dem die Farbe A zugeordnet ist, kann sich dann, zumindest vorübergehend, in die Zugriffszone 59 begeben, deren Zugriffsstation 29 durch den Blickfanggeber 35 ebenfalls mit der Farbe B gekennzeichnet ist, auf die jedoch nicht zugegriffen wird. Dieser Wechsel des Kommissionierers 7 von einer Zugriffszone 59 in eine andere Zugriffszone 59 ist durch den Pfeil 67 in Fig. 1 angedeutet.

In dem Moment, in dem der Kommissionierer 7, welchem zuvor die Farbe A zugeordnet war, die andere Zugriffszone 59 betritt, wird dies vom Lagerverwaltungssystem 6, insbesondere über wenigstens ein Positionserfassungssystem 39, erkannt und die Farbe im Anzeigebereich 17 seines Informationsgebers 15 von A auf B umgeschaltet. Dies ist in Fig. 1 bei der Lagereinheit 5 oben rechts durch die gepunktete Linie dargestellt. Der Kommissionierer 7 ist dann zumindest vorübergehend ebenfalls der Zusammenstellung 45 oder dem Kommissionierauftrag 43 des von Anfang an mit der Farbe B versehenen Kommissionierers zugeordnet.

So können beide Kommissionierer 7 die mit der Farbe B gekennzeichnete Zusammenstellung 45 oder den Kommissionierauftrag 43 abarbeiten. Dabei können auch beide Kommissionierer 7 den mit der Farbe B gekennzeichneten Kommissionierwagen 11 verwenden.

Ist die mit der Farbe B gekennzeichnete Zusammenstellung 45 oder der Kommissionierauftrag 43 vollständig oder ausreichend weit abgearbeitet, kann der Kommissionierer 7, dessen Farbe umgeschaltet wurde, wieder zu seiner ursprünglich bedienten Zugriffsstation 29 zurückkehren, wobei die Farbe seines Informationsgebers 15 wieder zur Farbe A umgeschaltet wird, sobald er die Zugriffszone 59 zu der mit der Farbe A markierten Zugriffsstation 29 betritt. Nun können beide Kommissionierer 7 wieder ihre jeweiligen Zusammenstellungen 45 oder Kommissionieraufträge 43 abarbeiten.

Durch das erfindungsgemäße Lagerverwaltungssystem 6 können also Kommissionierer 7, Kommissionierwagen 11 und Zugriffsstationen 29 flexibel zu bestimmten Zusammenstellungen 45 bzw. Kommissionieraufträgen 43 und/oder zueinander zugeordnet werden.

Der Informationsgeber 15 und/oder das Wearable 19 kann dazu ausgestaltet sein, ein akustisches Signal zu erzeugen. Das akustische Signal kann insbesondere durch das Lagerverwaltungssystem 6 auslösbar sein. Anstelle eines akustischen Signals oder zusätzlich zu diesem kann auch ein taktiles Signal, beispielsweise ein Vibrationsalarm erzeugt werden. Ein solches Signal kann durch das Lagerverwaltungssystem 6 zum Beispiel dann ausgelöst werden, wenn ein Farbwechsel am Anzeigebereich 17 des Informationsgebers 15 stattfindet.

Dies kann beispielsweise in dem oben beschriebenen Fall, in dem ein Kommissionierer 7 eine andere Zugriffszone 59 betritt und damit einen Wechsel der Farbe des Anzeigebereichs 17 seines Informationsgebers 15 auslöst, sinnvoll sein. Ein entsprechendes Signal kann auch erzeugt werden, wenn ein dem Kommissionierer 7 zugeordneter Kommissionierwagen 11 einen Farbwechsel erfährt, bzw. die Farbe des Anzeigebereichs 55 des Blickfanggebers 51 dieses Kommissionierwagens 11 umgeschaltet wird. Dadurch kann der Kommissionierer 7 intuitiv darüber in Kenntnis gesetzt werden, dass er nun eine andere Zusammenstellung 45 oder einen anderen Kommissionierauftrag 43 abarbeiten soll.

Im Folgenden sind noch einige optionale Verbesserungen des Lagerverwaltungssystems 6 und/oder des Kommissionier- und Lagersystems 1 beschrieben. Das Lagerverwaltungssystem 6 kann insbesondere dazu ausgestaltet sein, Farbkollisionen zu verhindern. Mit anderen Worten kann sichergestellt sein, dass Farben nicht doppelt vergeben werden, es sei denn, es soll, wie oben beschrieben, eine Zuordnung vorübergehend geändert werden, so dass mehrere Kommissionierer 7 oder auch Kommissionierwagen 11 zusätzlich zum Abarbeiten einer bereits in Arbeit befindlichen Zusammenstellung 45 oder eines bereits in Arbeit befindlichen Kommissionierauftrags 43 verwendet werden. Das Verhindem von Farbkollisionen ist insbesondere innerhalb einer Kommissionierzone 57 vorteilhaft. Sind beispielsweise in einer Lagerhalle mehrere Kommissionierzonen 57 vorhanden, können gleiche Farben in verschiedenen Kommissionierzonen 57 verwendet werden.

Die Blickfanggeber 51 der Kommissionierwagen 11 sind bevorzugt so ausgestaltet, dass die Farbe erkannt werden kann, sobald Sicht auf den Kommissionierwagen 11 möglich ist. Die Ausrichtung des Kommissionierwagens 11 sollte hierbei bevorzugt keine Rolle spielen. Dies ist unterschiedlich zu den optionalen Anzeigevorrichtungen 47 der Handling Units 41, welche in der Regel nur dann visuell erfasst werden können, wenn der Kommissionierer 7 zum einen in der Nähe der Handling Units 41 positioniert ist und zum anderen die Handling Units 41 mit ihren Anzeigevorrichtungen 47 zum Kommissionierer 7 hin ausgerichtet sind.

Das Lagerverwaltungssystem 6 ist bevorzugt zumindest datenübertragend, insbesondere drahtlos, mit allen Blickfanggebern 35, 51 und Informationsgebern 15 verbunden. Darüber hinaus ist es bevorzugt auch direkt oder indirekt mit den Positionsgebern 25 und 49 und/oder mit einem oder mehreren Positionserfassungssystemen 39 verbunden. Letztendlich ist das Lagerverwaltungssystem 6 bevorzugt auch mit den Quittiergebern 23 und den Steuereinrichtungen 33 der Lagereinheiten 5 datenübertragend verbunden.

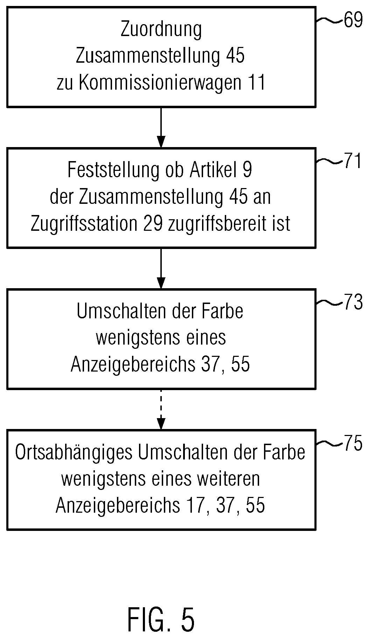

Im Folgenden ist ein Kommissionierverfahren gemäß der Erfindung mit Bezug auf das Blockschaltbild in Fig. 5 beschrieben.

In einem erstem Verfahrensschritt 69 wird einem Kommissionierwagen 11 eine Zusammenstellung 45 von Kommissionieraufträgen 43 mit einer Mehrzahl von Artikel 9 zugeordnet.

In einem weiteren Verfahrensschritt 71 wird vom Lagerverwaltungssystem 6 festgestellt, ob wenigstens ein Artikel 9 der Zusammenstellung 45 an einer Zugriffsstation 29 zugriffsbereit ist.

Ist dies der Fall, wird der Verfahrensschritt 73 ausgeführt, wobei die Farbe A, B wenigstens eines Anzeigebereichs 37 und/oder 55 umgeschaltet wird. Hierdurch kann sichergestellt werden, dass der Blickfanggeber 35 der Steuereinrichtung 33 und der Blickfanggeber 51 des Kommissionierwagens 11 die gleiche Farbe A, B anzeigen.

Anschließend kann wenigstens ein optionaler Verfahrensschritt 75 ausgeführt werden, wobei die Farbe wenigstens eines weiteren Anzeigebereich 17, 37 und/oder 55 ortsabhängig umgeschaltet wird.

Die verschiedenen Situationen, in denen dies beispielsweise erfolgen kann, sind oben mit Bezug auf die Fig. 1 beschrieben. Ebenso können die oben mit Bezug auf die Figuren 1 bis 4 beschriebenen Verwendungen des Lagerverwaltungssystems 6 und/oder des Kommissionier- und Lagersystems 1 als optionale Verfahrensschritte aufzufassen.

### Bezugszeichen

- 1: Kommissionier- und Lagersystem
- 3: Lager
- 5: Lagereinheit
- 6: Lagerverwaltungssystem
- 7: Kommissionierer
- 9: Artikel
- 11: Kommissionierwagen
- 13: Kommissionierstrecke
- 15: Informationsgeber
- 17: Anzeigebereich
- 19: Wearable
- 21: optisches Signal
- 23: Quittiergeber
- 25: Positionsgeber
- 27: Lagerplätze
- 29: Zugriffsstation
- 31: Beschickungs- und/oder Entnahmestation
- 33: Steuereinrichtung
- 35: Blickfanggeber
- 37: Anzeigebereich
- 39: Positionserfassungssystem
- 41: Handling Unit
- 43: Kommissionierauftrag
- 45: Zusammenstellung von Kommissionieraufträgen
- 47: Anzeigevorrichtung
- 49: Positionsgeber
- 51: Blickfanggeber
- 53: Blickfangleuchte
- 55: Anzeigebereich
- 57: Kommissionierzone
- 59: Zugriffszone
- 61: Position eines Kommissionierers
- 63: Position eines Kommissionierwagens
- 65: Zone
- 67: Pfeil
- 69-75: Verfahrensschritte
- 77: Computerprogrammprodukt

## Patentansprüche

1. Lagerverwaltungssystem (6) zur Steuerung einer Kommissionierung mittels wenigstens eines Kommissionierwagens (11) zur Ablage von Artikeln (9) einer Zusammenstellung (45) von Kommissionieraufträgen (43) und mittels wenigstens einer Lagereinheit (5) mit Lagerplätzen (27) zur Lagerung der Artikel (9) und wenigstens einer Zugriffsstation (29) zum Zugriff auf die Artikel (9) durch einen Kommissionierer (7), wobei der Kommissionierwagen (11) und die Zugriffsstation (29) jeweils mit einem Blickfanggeber (35, 51) versehen sind und wenigstens einer der Blickfanggeber (35, 51) einen Anzeigebereich (37, 55) mit ferngesteuert umschaltbarer Farbe (A, B) aufweist, wobei das Lagerverwaltungssystem (6) ausgestaltet ist, automatisch zu erkennen, ob wenigstens ein Artikel (9) der Zusammenstellung (45) in der Zugriffsstation (29) für den Kommissionierer (7) zugriffsbereit positioniert ist, **dadurch gekennzeichnet, dass** das Lagerverwaltungssystem (6) ausgestaltet ist, die Farbe (A, B) des wenigstens einen ferngesteuert umschaltbaren Blickfanggebers (35, 51) automatisch auf die Farbe (A, B) des anderen Blickfanggebers (35, 51) umzuschalten, wenn erkannt worden ist, dass der Artikel (9) innerhalb einer vorbestimmten Zeit zugriffsbereit positioniert ist, und dass das Lagerverwaltungssystem (6) ausgestaltet ist, in Abhängigkeit von einer Zuordnung des Kommissionierers (7) zu einem Kommissionierwagen (11) an einem Anzeigebereich (17) mit ferngesteuert umschaltbarer Farbe (A, B) eines am Körper des Kommissionierers (7) tragbaren Informationsgebers (15) und an einem Anzeigebereich (55) eines Blickfanggebers (51) eines Kommissionierwagens (11) automatisch die gleiche Farbe (A, B) einzustellen.

2. Lagerverwaltungssystem (6) nach Anspruch 1, wobei das Lagerverwaltungssystem (6) ausgestaltet ist, bei einer Vielzahl von Zugriffsstationen (29), die jeweils mit einem ferngesteuert umschaltbaren Blickfanggeber (35) versehen sind, automatisch die Anzeigebereiche (37) der Blickfanggeber (35) derjenigen Zugriffsstationen (29), die als bereit für den Zugriff auf Artikel (9) der Zusammenstellung (45) eines Kommissionierwagens (11) ermittelt sind, auf die Farbe (A, B) des Anzeigebereichs (55) des Blickfanggebers (51) dieses Kommissionierwagens (11) umzuschalten.

3. Lagerverwaltungssystem (6) nach Anspruch 1 oder 2, wobei das Lagerverwaltungssystem (6) ausgestaltet ist, bei einer Mehrzahl von Kommissionierwagen (11), die jeweils einen Blickfanggeber (51) mit einem Anzeigebereich (55) unterschiedlicher Farbe (A, B) aufweisen, und bei einer Vielzahl von Zugriffsstationen (29), die jeweils mit einem ferngesteuert umschaltbaren Blickfanggeber (35) versehen sind, automatisch die Anzeigebereiche (37) der Blickfanggeber (35) derjenigen Zugriffsstationen (29), die als bereit für den Zugriff auf Artikel (9) der Zusammenstellung (45) eines Kommissionierwagens (11) ermittelt sind, auf die Farbe (A, B) des Anzeigebereichs (55) dieses Kommissionierwagens (11) umzuschalten.

4. Lagerverwaltungssystem (6) nach einem der Ansprüche 1 bis 3, wobei das Lagerverwaltungssystem (6) ausgestaltet ist, nach Zugriff auf sämtliche für den Zugriff bereitgestellten Artikel (9) einer Zusammenstellung (45) aus einer Zugriffsstation (29) die Farbe (A, B) des Blickfanggebers (35) der Zugriffsstation (29) automatisch umzuschalten.

5. Lagerverwaltungssystem (6) nach einem der Ansprüche 1 bis 4, wobei das Lagerverwaltungssystem (6) ausgestaltet ist, eine oder mehrere Lagereinheiten (5) automatisch so zu steuern, dass einzelne Artikel (9) einer Zusammenstellung (45) in mehr als einer Zugriffsstation (29) gleichzeitig bereitgestellt werden.

6. Lagerverwaltungssystem (6) nach einem der Ansprüche 1 bis 5, wobei das Lagerverwaltungssystem (6) ausgestaltet ist, die Position (63) des wenigstens einen Kommissionierwagens (11) und/oder des Blickfanggebers (51) des wenigstens einen Kommissionierwagens (11) zu ermitteln.

7. Lagerverwaltungssystem (6) nach Anspruch 5 oder 6, wobei das Lagerverwaltungssystem (6) ausgestaltet ist, eine oder mehrere Lagereinheiten (5) in einer vorbestimmten Zone (65) um eine ermittelte Position (63) eines Kommissionierwagens (11) so zu steuern, dass einzelne Artikel (9) der Zusammenstellung (45) dieses Kommissionierwagens (11) in mehr als einer Zugriffsstation (29) der Zone (65) gleichzeitig bereitgestellt werden.

8. Lagerverwaltungssystem (6) nach Anspruch 6 oder 7, wobei das Lagerverwaltungssystem (6) ausgestaltet ist, die Farbe (A, B) eines Anzeigebereichs (37, 55) eines Blickfanggebers (35, 51) ortsabhängig umzuschalten.

9. Lagerverwaltungssystem (6) nach einem der Ansprüche 1 bis 8, wobei das Lagerverwaltungssystem (6) ausgestaltet ist, die Farben (A, B) von Anzeigebereichen (55) der Blickfanggeber (51) mehrerer Kommissionierwagen (11) automatisch auf jeweils unterschiedliche Farben (A, B) umzuschalten.

10. Lagerverwaltungssystem (6) nach einem der Ansprüche 1 bis 9, wobei das Lagerverwaltungssystem (6) ausgestaltet ist, automatisch die Position (61) eines am Körper eines Kommissionierers (7) tragbaren Informationsgebers (15) zu ermitteln und die Farbe (A, B) eines Anzeigebereichs (17) des Informationsgebers (15) abhängig von der Position (61) zu verändern.

11. Lagerverwaltungssystem (6) nach Anspruch 10, wobei das Lagerverwaltungssystem (6) ausgestaltet ist, die Farbe (A, B) des Anzeigebereichs (17) eines Informationsgebers (15) automatisch an die Farbe (A, B) eines Blickfanggebers (35) einer Zugriffsstation (29) anzupassen, wenn sich der Informationsgeber (15) in eine vorbestimmten Position relativ zu der Zugriffsstation (29) befindet.

12. Lagerverwaltungssystem (6) nach Anspruch 10 oder 11, wobei das Lagerverwaltungssystem (6) ausgestaltet ist, vor einer Zugriffsstation (29) eine Zugriffszone (59) mittels Geofencing zu bestimmen und die Farbe (A, B) des Anzeigebereichs (17) eines sich innerhalb der Zugriffszone (59) befindlichen Informationsgebers (15) automatisch auf die Farbe (A, B) des Anzeigebereichs (37) des Blickfanggebers (35) der Zugriffsstation (29) dieser Zugriffszone (59) zu setzen.

13. Lagerverwaltungssystem (6) nach einem der Ansprüche 10 bis 12, wobei das Lagerverwaltungssystem (6) ausgestaltet ist, die auf die Farbe (A, B) des Blickfanggebers (35) der Zugriffsstation (29) gesetzte Farbe (A, B) des Anzeigebereichs (17) des Informationsgebers (15) wieder auf eine zuvor eingestellte Farbe (A, B) zurückzusetzen, wenn sämtliche Artikel (9) der Zusammenstellung (45) desjenigen Kommissionierwagens (11) aus der Zugriffsstation (29) entnommen sind, dessen Anzeigebereich (55) dieselbe Farbe (A, B) aufweist wie der Anzeigebereich (17) des Informationsgebers (15) vor dem Zurückschalten.

14. Lagerverwaltungssystem (6) nach einem der Ansprüche 1 bis 13, wobei das Lagerverwaltungssystem (6) ausgestaltet ist, an einem von einem Kommissionierer (7) tragbaren Wearable (19) ein optische Signal (21) auszugeben, wobei das Signal (21) repräsentativ ist für eine Position einer Handling Unit (41) auf dem Kommissionierwagen (11), in die ein aus einer Zugriffsstation (29) entnommener Artikel (9) abzulegen ist und/oder eine in der Handling Unit (41) des Kommissionierwagens (11) abzulegende Anzahl und/oder Art der Artikel (9).

15. Kommissionier- und Lagersystem (1) mit einem Lagerverwaltungssystem (6) nach einem der Ansprüche 1 bis 14, mit wenigstens einem Kommissionierwagen (11), der mit einem Blickfanggeber (51) mit einem farbigen Anzeigebereich (55) versehen ist, und mit wenigstens einer Lagereinheit (5), die mit einem weiteren Blickfanggeber (35) mit einem farbigen Anzeigebereich (37) versehen ist, wobei wenigstens ein Anzeigebereich (35, 51) eine vom Lagerverwaltungssystem (6) ferngesteuert umschaltbare Farbe (A, B) aufweist.

16. Kommissionier- und Lagersystem (1) nach Anspruch 15, mit einem als Wearable (19) ausgestalteten Informationsgeber (15), der einen Anzeigebereich (17) mit ferngesteuert umschaltbarer Farbe (A, B) aufweist und über das Lagerverwaltungssystem (6) mit den Blickfanggebern (35, 51) des wenigstens einen Kommissionierwagens (11) und der wenigstens einen Lagereinheit (5) datenübertragend verbunden ist.

17. Kommissionier- und Lagersystem (1) nach Anspruch 15 oder 16, mit einer vom Lagerverwaltungssystem (6) mittels Geofencing bestimmten, für einen Kommissionierer (7) zum Zugriff auf die Zugriffsstation (29) einer Lagereinheit (5) zugänglichen, vor der Zugriffsstation (29) angeordneten Zugriffszone (59) und mit einem vom Kommissionierer (7) tragbaren Positionsgeber (25) zur Bestimmung der Position (61) des Kommissionierers (7) relativ zur Zugriffszone (59).

18. Kommissionierverfahren,
bei dem einem Kommissionierwagen (11) eine Zusammenstellung (45) von Kommissionieraufträgen (43) mit einer Mehrzahl von Artikeln (9) zugeordnet wird,
bei dem automatisch festgestellt wird, dass wenigstens ein Artikel (9) der Zusammenstellung (45) an wenigstens einer Zugriffsstation (29) wenigstens einer Lagereinheit (5) für einen Kommissionierer (7) zugriffsbereit ist,
wobei der Kommissionierwagen (11) und die Zugriffsstation (29) jeweils einen Blickfanggeber (35, 51) mit einem farbigen Anzeigebereich (37, 55) aufweisen und die Farbe (A, B) wenigstens eines Anzeigebereichs (37, 55) ferngesteuert umschaltbar ist,
**dadurch gekennzeichnet, dass** die Farbe (A, B) des wenigstens einen ferngesteuert umschaltbaren Anzeigebereichs (37, 55) nach der Feststellung der Zugriffsbereitschaft automatisch auf die Farbe (A, B) des anderen Anzeigebereichs (37, 55) umgeschaltet wird, und
dass in Abhängigkeit von einer Zuordnung des Kommissionierers (7) zu einem Kommissionierwagen (11) an einem Anzeigebereich (17) mit ferngesteuert umschaltbarer Farbe (A, B) eines am Körper des Kommissionierers (7) tragbaren Informationsgebers (15) und an einem Anzeigebereich (55) eines Blickfanggebers (51) eines Kommissionierwagens (11) automatisch die gleiche Farbe (A, B) eingestellt wird.

19. Computerprogrammprodukt (77) oder computerlesbares Speichermedium, umfassend Befehle, die bei der Ausführung des Programms durch einen Computer diesen veranlassen, das Verfahren nach Anspruch 18 auszuführen.

## Claims

1. Warehouse management system (6) for controlling order picking by means of at least one order picking trolley (11) for depositing articles (9) of a set (45) of order picking instructions (43), and by means of at least one storage unit (5) which has storage locations (27) for storing the articles (9), and at least one access station (29) for access to the articles (9) by an order picker (7), the order picking trolley (11) and the access station (29) each being provided with an eye-catching transmitter (35, 51) and at least one of the eye-catching transmitters (35, 51) having a display region (37, 55) which has a remotely switchable color (A, B), the warehouse management system (6) being designed to automatically detect whether at least one article (9) of the set (45) is positioned in the access station (29) so as to be ready to be accessed by the order picker (7), **characterized in that** the warehouse management system (6) is designed to automatically switch the color (A, B) of the at least one remotely switchable eye-catching transmitter (35, 51) to the color (A, B) of the other eye-catching transmitter (35, 51) when it detects that the article (9) is positioned so as to be ready to be accessed within a predetermined time, **and in that** the warehouse management system (6) is designed to automatically set the same color (A, B) on a display region (17), which has a remotely switchable color (A, B), of an information transmitter (15) which can be worn on the body of the order picker (7), and on a display region (55) of an eye-catching transmitter (51) of an order picking trolley (11), depending on an assignment of the order picker (7) to an order picking trolley (11).

2. Warehouse management system (6) according to claim 1, wherein, in the case of a plurality of access stations (29) which are each provided with a remotely switchable eye-catching transmitter (35), the warehouse management system (6) is designed to automatically switch the display regions (37) of the eye-catching transmitters (35) of the access stations (29) that are determined to be ready for access to articles (9) of the set (45) of an order picking trolley (11) to the color (A, B) of the display region (55) of the eye-catching transmitter (51) of this order picking trolley (11).

3. Warehouse management system (6) according to claim 1 or 2, wherein, in the case of a plurality of order picking trolleys (11) which each have an eye-catching transmitter (51) having a display region (55) of a different color (A, B), and in the case of a plurality of access stations (29) which are each provided with a remotely switchable eye-catching transmitter (35), the warehouse management system (6) is designed to automatically switch the display regions (37) of the eye-catching transmitters (35) of the access stations (29) that are determined to be ready for access to articles (9) of the set (45) of an order picking trolley (11) to the color (A, B) of the display region (55) of this order picking trolley (11).

4. Warehouse management system (6) according to any of claims 1 to 3, wherein the warehouse management system (6) is designed to automatically switch the color (A, B) of the eye-catching transmitter (35) of the access station (29) after access to all articles (9) of a set (45) provided for access from an access station (29).

5. Warehouse management system (6) according to any of claims 1 to 4, wherein the warehouse management system (6) is designed to automatically control one or more storage units (5) such that individual articles (9) of a set (45) are provided simultaneously in more than one access station (29).

6. Warehouse management system (6) according to any of claims 1 to 5, wherein the warehouse management system (6) is designed to determine the position (63) of the at least one order picking trolley (11) and/or of the eye-catching transmitter (51) of the at least one order picking trolley (11).

7. Warehouse management system (6) according to claim 5 or 6, wherein the warehouse management system (6) is designed to control one or more storage units (5) in a predetermined zone (65) around a determined position (63) of an order picking trolley (11) such that individual articles (9) of the set (45) of this order picking trolley (11) are provided simultaneously in more than one access station (29) of the zone (65).

8. Warehouse management system (6) according to claim 6 or 7, wherein the warehouse management system (6) is designed to switch the color (A, B) of a display region (37, 55) of an eye-catching transmitter (35, 51) depending on the location.

9. Warehouse management system (6) according to any of claims 1 to 8, wherein the warehouse management system (6) is designed to automatically switch the colors (A, B) of display regions (55) of the eye-catching transmitters (51) of a plurality of order picking trolleys (11) to different colors (A, B) in each case.

10. Warehouse management system (6) according to any of claims 1 to 9, wherein the warehouse management system (6) is designed to automatically determine the position (61) of an information transmitter (15) which can be worn on the body of an order picker (7) and, depending on the position (61), to change the color (A, B) of a display region (17) of the information transmitter (15).

11. Warehouse management system (6) according to claim 10, wherein the warehouse management system (6) is designed to automatically adjust the color (A, B) of the display region (17) of an information transmitter (15) to the color (A, B) of an eye-catching transmitter (35) of an access station (29) when the information transmitter (15) is in a predetermined position relative to the access station (29).

12. Warehouse management system (6) according to claim 10 or 11, wherein the warehouse management system (6) is designed to designate an access zone (59) in front of an access station (29) by means of geofencing, and to automatically set the color (A, B) of the display region (17) of an information transmitter (15) located within the access zone (59) to the color (A, B) of the display region (37) of the eye-catching transmitter (35) of the access station (29) of this access zone (59).

13. Warehouse management system (6) according to any of claims 10 to 12, wherein the warehouse management system (6) is designed to reset the color (A, B) of the display region (17) of the information transmitter (15) that is set to the color (A, B) of the eye-catching transmitter (35) of the access station (29) back to a previously set color (A, B) when all articles (9) of the set (45) of the order picking trolley (11), whose display region (55) has the same color (A, B) as the display region (17) of the information transmitter (15) before being switched back, have been removed from the access station (29).

14. Warehouse management system (6) according to any of claims 1 to 13, wherein the warehouse management system (6) is designed to output a visual signal (21) on a wearable (19) which can be worn by an order picker (7), wherein the signal (21) is representative of a position of a handling unit (41) on the order picking trolley (11) into which an article (9) removed from an access station (29) is to be deposited, and/or a number and/or type of articles (9) to be deposited in the handling unit (41) of the order picking trolley (11).

15. Order picking and storage system (1) comprising a warehouse management system (6) according to any of claims 1 to 14, at least one order picking trolley (11) which is provided with an eye-catching transmitter (51) having a colored display region (55), and at least one storage unit (5) which is provided with an additional eye-catching transmitter (35) having a colored display region (37), wherein at least one display region (35, 51) has a color (A, B) which can be switched remotely by the warehouse management system (6).

16. Order picking and storage system (1) according to claim 15, comprising an information transmitter (15) designed as a wearable (19), which has a display region (17) having a remotely switchable color (A, B) and is connected, via the warehouse management system (6), in a data-transmitting manner to the eye-catching transmitters (35, 51) of the at least one order picking trolley (11) and the at least one storage unit (5).

17. Order picking and storage system (1) according to claim 15 or 16, comprising an access zone (59) which is designated by the warehouse management system (6) by means of geofencing, is accessible to an order picker (7) for access to the access station (29) of a storage unit (5) and is arranged in front of the access station (29), and comprising a position transmitter (25) which can be worn by the order picker (7) for determining the position (61) of the order picker (7) relative to the access zone (59).

18. Order picking process,
in which a set (45) of order picking instructions (43) comprising a plurality of articles (9) is assigned to an order picking trolley (11),
in which it is automatically determined that at least one article (9) of the set (45) is ready to be accessed by an order picker (7) at at least one access station (29) of at least one storage unit (5),
the order picking trolley (11) and the access station (29) each having an eye-catching transmitter (35, 51) which has a colored display region (37, 55) and the color (A, B) of at least one display region (37, 55) being remotely switchable,
**characterized in that** the color (A, B) of the at least one remotely switchable display region (37, 55) is automatically switched to the color (A, B) of the other display region (37, 55) after it has been determined to be ready for access, and
**in that** the same color (A, B) is automatically set on a display region (17), which has a remotely switchable color (A, B), of an information transmitter (15) which can be worn on the body of the order picker (7), and on a display region (55) of an eye-catching transmitter (51) of an order picking trolley (11), depending on an assignment of the order picker (7) to an order picking trolley (11).

19. Computer program product (77) or computer-readable storage medium comprising commands which, when the program is executed by a computer, cause the computer to execute the process according to claim 18.

## Revendications

1. Système de gestion des stocks (6) pour la commande d'une préparation de commandes au moyen d'au moins un chariot de préparation de commandes (11) pour le dépôt d'articles (9) d'un ensemble (45) d'ordres de préparation de commandes (43) et au moyen d'au moins une unité de stockage (5) comportant des emplacements de stockage (27) pour le stockage des articles (9) et au moins un poste d'accès (29) pour l'accès aux articles (9) par un préparateur de commandes (7), dans lequel le chariot de préparation de commandes (11) et le poste d'accès (29) sont respectivement pourvus d'un appareil attirant le regard (35, 51) et au moins l'un des appareils attirant le regard (35, 51) présente une zone d'affichage (37, 55) comportant des couleurs (A, B) commutables par télécommande, dans lequel le système de gestion des stocks (6) est configuré pour reconnaître automatiquement si au moins un article (9) de l'ensemble (45) est positionné dans le poste d'accès (29) de manière à être accessible par le préparateur de commandes (7),
**caractérisé en ce que** le système de gestion des stocks (6) est configuré pour commuter automatiquement la couleur (A, B) de l'au moins un appareil attirant le regard (35, 51) commutable par télécommande vers la couleur (A, B) de l'autre appareil attirant le regard (35, 51) lorsqu'il a été reconnu que l'article (9) est positionné de manière à être accessible dans un temps prédéterminé, et **en ce que** le système de gestion des stocks (6) est configuré pour, en fonction d'une attribution du préparateur de commandes (7) à un chariot de préparation de commandes (11), régler automatiquement la même couleur (A, B) sur une zone d'affichage (17) comportant des couleurs (A, B) commutables par télécommande d'un transmetteur d'informations (15) pouvant être porté sur le corps du préparateur de commandes (7) et sur une zone d'affichage (55) d'un appareil attirant le regard (51) d'un chariot de préparation de commandes (11).

2. Système de gestion des stocks (6) selon la revendication 1, dans lequel le système de gestion des stocks (6) est configuré pour, dans le cas d'une pluralité de postes d'accès (29) qui sont respectivement pourvus d'un appareil attirant le regard (35) commutable par télécommande, commuter automatiquement les zones d'affichage (37) des appareils attirant le regard (35) desdits postes d'accès (29), lesquels sont déterminés comme étant prêts pour l'accès à des articles (9) de l'ensemble (45) d'un chariot de préparation de commandes (11), vers la couleur (A, B) de la zone d'affichage (55) de l'appareil attirant le regard (51) dudit chariot de préparation de commandes (11).

3. Système de gestion des stocks (6) selon la revendication 1 ou 2, dans lequel le système de gestion des stocks (6) est configuré pour, dans le cas d'une pluralité de chariots de préparation de commandes (11) qui présentent respectivement un appareil attirant le regard (51) comportant une zone d'affichage (55) de couleurs (A, B) différentes, et dans le cas d'une pluralité de postes d'accès (29) qui sont respectivement pourvus d'un appareil attirant le regard (35) commutable par télécommande, commuter automatiquement les zones d'affichage (37) des appareils attirant le regard (35) desdits postes d'accès (29), lesquels sont déterminés comme étant prêts pour l'accès à des articles (9) de l'ensemble (45) d'un chariot de préparation de commandes (11), vers la couleur (A, B) de la zone d'affichage (55) dudit chariot de préparation de commandes (11).

4. Système de gestion des stocks (6) selon l'une des revendications 1 à 3, dans lequel le système de gestion des stocks (6) est configuré pour commuter automatiquement, chez un poste d'accès (29), la couleur (A, B) de l'appareil attirant le regard (35) du poste d'accès (29) après l'accès à tous les articles (9) d'un ensemble (45) mis à disposition pour l'accès.

5. Système de gestion des stocks (6) selon l'une des revendications 1 à 4, dans lequel le système de gestion des stocks (6) est configuré pour commander automatiquement une ou plusieurs unités de stockage (5) de sorte que des articles (9) individuels d'un ensemble (45) sont mis à disposition simultanément dans plus d'un poste d'accès (29).

6. Système de gestion des stocks (6) selon l'une des revendications 1 à 5, dans lequel le système de gestion des stocks (6) est configuré pour déterminer la position (63) de l'au moins un chariot de préparation de commandes (11) et/ou de l'appareil attirant le regard (51) de l'au moins un chariot de préparation de commandes (11).

7. Système de gestion des stocks (6) selon la revendication 5 ou 6, dans lequel le système de gestion des stocks (6) est configuré pour commander une ou plusieurs unités de stockage (5) dans une zone (65) prédéterminée autour d'une position (63) définie d'un chariot de préparation de commandes (11) de sorte que des articles (9) individuels de l'ensemble (45) dudit chariot de préparation de commandes (11) sont mis à disposition simultanément dans plus d'un poste d'accès (29) de la zone (65).

8. Système de gestion des stocks (6) selon la revendication 6 ou 7, dans lequel le système de gestion des stocks (6) est configuré pour commuter la couleur (A, B) d'une zone d'affichage (37, 55) d'un appareil attirant le regard (35, 51) en fonction de l'emplacement.

9. Système de gestion des stocks (6) selon l'une des revendications 1 à 8, dans lequel le système de gestion des stocks (6) est configuré pour commuter automatiquement les couleurs (A, B) de zones d'affichage (55) des appareils attirant le regard (51) de plusieurs chariots de préparation de commandes (11) vers des couleurs (A, B) respectivement différentes.

10. Système de gestion des stocks (6) selon l'une des revendications 1 à 9, dans lequel le système de gestion des stocks (6) est configuré pour déterminer automatiquement la position (61) d'un transmetteur d'informations (15) pouvant être porté sur le corps d'un préparateur de commandes (7) et pour modifier la couleur (A, B) d'une zone d'affichage (17) du transmetteur d'informations (15) en fonction de la position (61).

11. Système de gestion des stocks (6) selon la revendication 10, dans lequel le système de gestion des stocks (6) est configuré pour adapter automatiquement la couleur (A, B) de la zone d'affichage (17) d'un transmetteur d'informations (15) à la couleur (A, B) d'un appareil attirant le regard (35) d'un poste d'accès (29) lorsque le transmetteur d'informations (15) se trouve dans une position prédéterminée par rapport au poste d'accès (29).

12. Système de gestion des stocks (6) selon la revendication 10 ou 11, dans lequel le système de gestion des stocks (6) est configuré pour déterminer une zone d'accès (59) en amont d'un poste d'accès (29) par géorepérage et pour régler automatiquement la couleur (A, B) de la zone d'affichage (17) d'un transmetteur d'informations (15) se trouvant à l'intérieur de la zone d'accès (59) sur la couleur (A, B) de la zone d'affichage (37) de l'appareil attirant le regard (35) du poste d'accès (29) de ladite zone d'accès (59).

13. Système de gestion des stocks (6) selon l'une des revendications 10 à 12, dans lequel le système de gestion des stocks (6) est configuré pour rétablir la couleur (A, B) de la zone d'affichage (17) du transmetteur d'informations (15), laquelle couleur est réglée sur la couleur (A, B) de l'appareil attirant le regard (35) du poste d'accès (29), à une couleur (A, B) réglée au préalable lorsque tous les articles (9) de l'ensemble (45) du chariot de préparation de commandes (11) ont été retirés du poste d'accès (29) dont la zone d'affichage (55) présente la même couleur (A, B) que la zone d'affichage (17) du transmetteur d'informations (15) avant le rétablissement.

14. Système de gestion des stocks (6) selon l'une des revendications 1 à 13, dans lequel le système de gestion des stocks (6) est configuré pour émettre un signal optique (21) sur un dispositif portable (19) pouvant être porté par un préparateur de commandes (7), dans lequel le signal (21) représente une position d'une unité de manutention (41) sur le chariot de préparation de commandes (11) dans laquelle doit être déposé un article (9) retiré d'un poste d'accès (29), et/ou un nombre et/ou un type d'article (9) à déposer dans l'unité de manutention (41) du chariot de préparation de commandes (11).

15. Système de préparation de commandes et de stockage (1) comportant un système de gestion des stocks (6) selon l'une des revendications 1 à 14, comportant au moins un chariot de préparation de commandes (11) qui est pourvu d'un appareil attirant le regard (51) comportant une zone d'affichage (55) colorée, et comportant au moins une unité de stockage (5) qui est pourvue d'un autre appareil attirant le regard (35) comportant une zone d'affichage (37) colorée, dans lequel au moins une zone d'affichage (35, 51) présente des couleurs (A, B) commutables par télécommande par le système de gestion des stocks (6).

16. Système de préparation de commandes et de stockage (1) selon la revendication 15, comportant un transmetteur d'informations (15) configuré comme un dispositif portable (19) qui présente une zone d'affichage (17) comportant des couleurs (A, B) commutables par télécommande et qui est connecté par transmission de données, par l'intermédiaire du système de gestion des stocks (6), aux appareils attirant le regard (35, 51) de l'au moins un chariot de préparation de commandes (11) et de l'au moins une unité de stockage (5).

17. Système de préparation de commandes et de stockage (1) selon la revendication 15 ou 16, comportant une zone d'accès (59) déterminée par le système de gestion des stocks (6) par géorepérage, accessible par un préparateur de commandes (7) pour l'accès au poste d'accès (29) d'une unité de stockage (5), et disposée devant le poste d'accès (29), et comportant un capteur de position (25) pouvant être porté par le préparateur de commandes (7) et permettant de déterminer la position (61) du préparateur de commandes (7) par rapport à la zone d'accès (59).

18. Procédé de préparation de commandes,
dans lequel un ensemble (45) d'ordres de préparation de commandes (43) comportant une pluralité d'articles (9) est attribué à un chariot de préparation de commandes (11),
dans lequel on constate automatiquement qu'au moins un article (9) de l'ensemble (45) est accessible par un préparateur de commandes (7) au niveau d'au moins un poste d'accès (29) d'au moins une unité de stockage (5),
dans lequel le chariot de préparation de commandes (11) et le poste d'accès (29) présentent respectivement un appareil attirant le regard (35, 51) comportant une zone d'affichage (37, 55) colorée et la couleur (A, B) d'au moins une zone d'affichage (37, 55) est commutable par télécommande,
**caractérisé en ce que** la couleur (A, B) de l'au moins une zone d'affichage (37, 55) commutable par télécommande est automatiquement commutée vers la couleur (A, B) de l'autre zone d'affichage (37, 55) après la constatation de la disponibilité d'accès, et
**en ce que,** en fonction d'une attribution du préparateur de commandes (7) à un chariot de préparation de commandes (11), la même couleur (A, B) est réglée automatiquement sur une zone d'affichage (17) comportant des couleurs (A, B) commutables par télécommande d'un transmetteur d'informations (15) pouvant être porté sur le corps du préparateur de commandes (7) et sur une zone d'affichage (55) d'un appareil attirant le regard (51) d'un chariot de préparation de commandes (11).

19. Produit-programme informatique (77) ou support de stockage lisible par ordinateur, comprenant des instructions qui, lorsque le programme est exécuté par un ordinateur, amènent celui-ci à exécuter le procédé selon la revendication 18.
